# EUROPEAN PATENT SPECIFICATION

(11) **EP 4 362 610 B1**
(45) Date of publication and mention of the grant of the patent: **31.12.2025**
(21) Application number: 23205511.1
(22) Date of filing: 24.10.2023
(51) Int. Cl.: H05G 2/00, F16L 55/103

(54) **RAW MATERIAL SUPPLY DEVICE AND LIGHT SOURCE APPARATUS**
ROHMATERIALZUFUHRVORRICHTUNG UND LICHTQUELLENVORRICHTUNG
DISPOSITIF D'ALIMENTATION EN MATIÈRE PREMIÈRE ET APPAREIL DE SOURCE DE LUMIÈRE

(30) Priority: 28.10.2022 JP 2022173154
(43) Date of publication of application: 01.05.2024
(73) Proprietor: Ushio Denki Kabushiki Kaisha, Tokyo, 1080073 (JP)
(72) Inventor: ASHIZAWA, Noritaka, Tokyo, 1008150 (JP); HIRATA, Hironobu, Tokyo, 1008150 (JP)
(74) Representative: Maiwald GmbH

(56) References cited:
- EP-B1- 0 368 306
- JP-A- 2008 294 393
- US-A1- 2022 213 981
- US-B2- 7 122 816

## Description

### Technical Field

The present invention relates to a raw material supply device that supplies a plasma raw material for generating X-rays, extreme ultraviolet light, or the like, and a light source apparatus including the raw material supply device.

### Background Art

X-rays have been conventionally used for medical, industrial and research applications.

In the medical field, X-rays are used for such applications as chest radiography, dental radiography, and computed tomography (CT).

In the industrial field, X-rays are used for such applications as non-destructive testing and tomographic non-destructive testing to observe the inside of materials such as structures and welds.

In the research field, X-rays are used for such applications as X-ray diffraction to analyze the crystal structure of materials and X-ray spectroscopy (X-ray fluorescence analysis) to analyze the constituent composition of materials.

Extreme ultraviolet light (hereinafter, referred to as "EUV light") having a wavelength of 13.5 nm, which is in the soft X-ray region having a relatively long wavelength among X-rays, has been recently used for exposure light.

The base material of a mask for EUV lithography, the mask being provided with fine patterns, is a reflective mirror having a stacked structure, which is provided with a multilayer film (e.g., molybdenum and silicon) for reflecting EUV light on a substrate ma de of low-thermal-expansion glass.

The EUV mask is fabricated by patterning a material that absorbs radiation having a wavelength of 13.5 nm on the multilayer film.

The size of unacceptable defects in EUV masks is much smaller than that of conventional ArF masks, making its detection difficult.

Hence, EUV masks are usually inspected using radiation having a wavelength that matches the wavelength operated on lithography, which is called an actinic inspection.

For example, when performed using radiation having a wavelength of 13.5 nm, the actinic inspection can detect defects with resolution better than 10 nm.

EUV light source apparatuses generally include DPP (Discharge Produced Plasma) light source apparatuses, LDP (Laser Assisted Discharge Produced Plasma) light source apparatuses, and LPP (Laser Produced Plasma) light source apparatuses.

The DPP light source apparatus applies high voltage between electrodes between which a plasma raw material in the gas state (discharge gas) containing EUV radiation species is supplied to generate high-density high-temperature plasma by the discharge, utilizing the extreme ultraviolet light radiated from the plasma.

The LDP light source apparatus is an improved version of the DPP light source apparatus. In the DPP light source apparatus, for example, a liquid high-temperature plasma raw material (e.g., Sn (tin) or Li (lithium)) containing EUV radiation species is supplied to the surface of the electrode (discharge electrode) at which the discharge occurs. The raw material is then irradicated with an energy beam (e.g., an electron beam or a laser beam) to vaporize the raw material, and then high-temperature plasma is generated by discharge.

The LPP light source apparatus generates high-temperature plasma by exciting the EUV radiation species with a laser beam or the like. As the light source apparatus using this method, those focusing a laser beam on a droplet that has been ejected in a form of a minute liquid droplet, which is the target material for EUV radiation, to excite the target material thereby generating plasm have been known. The droplet is made of materials such as tin (Sn) and lithium (Li).

Patent Literature 1 discloses a light source apparatus that partially immersing a rotation body in a reservoir tank storing a liquid plasma raw material for generating radiation such as X-rays and EUV, supplies the liquid plasma raw material from the reservoir tank to the surface of the rotation body, and applies an energy beam (laser beam) to the surface of the rotation body to obtain radiation. This method corresponds to a so-called LPP method. In this light source apparatus, the thickness of the plasma raw material on the rotation body is controlled to a predetermined thickness by a thickness control mechanism. An opening is provided in part of the cover-like structure surrounding the reservoir tank. The surface of the rotation body coated with the high-temperature plasma raw material is irradicated with an energy beam through the opening. As a result, the plasma raw material on the surface of the rotation body can be transformed into plasma to obtain radiation.

In Patent Literature 1, the liquid plasma raw material is supplied from a liquid raw material circulation apparatus to the reservoir tank through a raw material inlet pipe and a raw material outlet pipe. As a result, it is possible to store a certain amount of plasma raw material in the reservoir tank. For example, there is no need to supply the liquid plasma raw material in the form of droplets. For this reason, it is possible to obtain high-luminance radiation with a relatively simple configuration as compared with the method of focusing a laser beam on droplets.
Patent Literature 3 describes a raw material supply device with the features of the preamble of present claim 1.

### Citation List

### Patent Literature

Patent Literature 1: Japanese Patent No. 6241062
Patent Literature 2: Japanese Patent Application Laid-open No. 2016-99289
Patent Literature 3: JP 2008 294393 A

### Summary of Invention

The liquid raw material circulation apparatus disclosed in Patent Literature 1 includes, in addition to an apparatus body that circulates the liquid plasma raw material, the raw material inlet pipe and the raw material outlet pipe that connect the apparatus body and the reservoir tank to each other. In this configuration, it is necessary to fill not only the reservoir tank but also with the raw material inlet pipe and the raw material outlet pipe with the plasma raw material. For this reason, a different reservoir tank for storing the plasma raw material in the liquid state is provided to the apparatus body of the liquid raw material circulation apparatus. In order to smoothly circulate the liquid plasma raw material between the two reservoir tanks, the raw material inlet pipe, and the raw material outlet pipe, a large amount of liquid plasma raw material is necessary.

The liquid plasma raw material supplied onto the rotation body is transformed into plasma by irradiation with an energy beam and is consumed. Part of the liquid plasma raw material is also consumed by scattering as debris or the like. For this reason, for example, it is necessary to also store, in the different reservoir tank provided to the apparatus body of the liquid raw material circulation apparatus, a plasma raw material to be consumed during the operation of the light source apparatus.

In this way, in the case where the liquid raw material circulation apparatus is used, a plasma raw material in the amount larger than the volume of the reservoir tank in which part of the rotation body is immersed is necessary.

In the case where heated molten metal is used as a plasma raw material, in order to maintain the state of the molten metal, it is necessary to heat all portions where the plasma raw material is present and keep them warm. This increases energy consumption in some cases.

Incidentally, Patent Literature 2 discloses a supply mechanism (tin supply mechanism) that circulates a liquid plasma raw material (tin) into a container. A reservoir that has a larger capacity than the container and accommodates tin in the liquid state is provided to this supply mechanism. Solid tin balls are supplied from a tin filling mechanism to the reservoir. As described above, a method of directly supplying a solid plasma raw material to a container for storing a liquid plasma raw material is also possible.

For example, in the case where a solid plasma raw material is directly supplied to the reservoir tank in which part of the rotation body is immersed disclosed in Patent Literature 1 without using a liquid raw material circulation apparatus, there is a possibility that the temperature of the liquid plasma raw material that has been stored in the reservoir tank drops. As a result, it is conceivable that the characteristics of the plasma raw material to be supplied to the irradiation position of an energy beam change and the light emission operation becomes unstable. Further, it presumably takes a certain amount of time for the solid plasma raw material to liquefy and the temperature of the plasma raw material inside the container to stabilize, and there is a possibility that stable supply of raw materials becomes difficult.

In view of the circumstances as described above, it is an object of the present invention to reduce the storage amount of plasma raw material, reduce energy consumption, and provide a raw material supply device and a light source apparatus that are capable of stably supplying the plasma raw material.

In order to achieve the above-mentioned object, a raw material supply device according to the present invention is a raw material supply device as defined in claim 1.

In this raw material supply device, the plasma raw material held in the liquid state inside the raw material tank is supplied to the storage container inside the reduced-pressure chamber through the supply pipe while maintaining the liquid state. Further, the supply of the liquid plasma raw material through the supply pipe is controlled by the supply controller. As a result, it is possible to supply the liquid plasma raw material to the storage container as necessary without circulating the raw material. As a result, it is possible to reduce the storage amount of plasma raw material, reduce energy consumption, and stably supply a plasma raw material.

The raw material tank may be provided outside the reduced-pressure chamber. In this case, the supply pipe may penetrate a wall of the reduced-pressure chamber to connect the raw material tank and the reduced-pressure chamber to each other.

The supply controller includes a supply valve mechanism that is provided to the supply pipe and opens and closes flow of the liquid plasma raw material.

The supply valve mechanism may be a first temperature control mechanism for adjusting a temperature of at least part of the supply pipe such that a state of the plasma raw material is changeable into either a solid state or a liquid state.

The supply pipe may include a narrowed portion where a channel is narrowed. In this case, the first temperature control mechanism may be provided to the narrowed portion.

The supply pipe may include a first bent portion and a second bent portion, the first bent portion being connected to a side of the raw material tank and bending a channel of the liquid plasma raw material from downward to upward, the second bent portion being connected to a side of the reduced-pressure chamber and bending the channel from upward to downward. In this case, a lower surface of the channel formed in the second bent portion may be disposed at a position higher than an upper surface of the channel formed in the first bent portion.

The supply controller may include a second temperature control mechanism for adjusting a temperature of the first bent portion such that a state of the plasma raw material is changeable into either a solid state or a liquid state.

The supply pipe may include an inlet to which the liquid plasma raw material flows from the raw material tank, and the inlet may be disposed at a position higher than an inside bottom of the raw material tank.

The raw material tank may include a replenishment port to be replenished with the plasma raw material. In this case, the inlet may be disposed at a position that does not overlap vertically with the replenishment port.

The raw material supply device includes a raw material replenishment section that replenishes the raw material tank with the plasma raw material.

The raw material supply device includes an exhaust pipe that connects the raw material tank and a predetermined exhaust mechanism to each other. The raw material replenishment section includes a supply section that supplies the plasma raw material for replenishing the raw material tank, a replenishment pipe that connects the supply section and the raw material tank to each other and causes the plasma raw material supplied from the supply section to pass therethrough, and a replenishment valve mechanism that is provided to the replenishment pipe and maintains a reduced-pressure atmosphere of the raw material tank.

The storage container may include a storage portion that opens upward and stores the liquid plasma raw material. In this case, the supply pipe may include an outlet of which the liquid plasma raw material flows out, and the outlet may be disposed at a position lower than an opening end of the storage portion of the storage container.

The supply controller may include a third temperature control mechanism for adjusting a temperature of a portion of the supply pipe protruding toward the inside of the reduced-pressure chamber such that the plasma raw material enters one of a solid state and a liquid state.

The storage container may include a storage portion that opens upward and stores the liquid plasma raw material. In this case, the supply pipe may include an outlet of which the liquid plasma raw material flows out. The raw material supply device may further include a defense pipe that is provided to surround the outlet and extends to a position lower than an opening end of the storage portion of the storage container.

A light source apparatus according to the present invention is a light source apparatus that causes a plasma raw material to be transformed into plasma by irradiating the plasma raw material with an energy beam to generate radiation, including: a reduced-pressure chamber; a storage container; and the raw material supply device as claimed in claim 1.

The light source apparatus may further include a rotation body to be irradiated with the energy beam. In this case, the storage container may be a raw material container that is provided such that the rotation body is immersed and supplies the liquid plasma raw material to the rotation body.

The storage container may be a rotating drum that includes a storage portion opening upward and stores the liquid plasma raw material on an inner surface of the storage portion. In this case, the energy beam may be applied to the inner surface of the storage portion.

### Advantageous Effects of Invention

According to the present invention, it is possible to reduce the storage amount of plasma raw material, reduce energy consumption, and stably supply a plasma raw material.

### Brief Description of Drawings

[Fig. 1] Fig. 1 is a schematic diagram illustrating a configuration example of a light source apparatus according to a first embodiment of the present invention.
[Fig. 2] Fig. 2 is a schematic diagram illustrating a configuration example of a plasma generation mechanism and a raw material supply device according to the first embodiment.
[Fig. 3] Fig. 3 is a flowchart illustrating an operation example of the raw material supply device shown in Fig. 2.
[Fig. 4] Fig. 4 is a flowchart illustrating an example of a raw material replenishment operation performed by the raw material supply device.
[Fig. 5] Fig. 5 is a flowchart showing an example of a raw material supply operation performed by the raw material supply device.
[Fig. 6] Fig. 6 is a schematic diagram illustrating a configuration example of a raw material supply device according to a second embodiment.
[Fig. 7] Fig. 7 is a schematic diagram illustrating a configuration example of a raw material supply device according to a third embodiment.
[Fig. 8] Fig. 8 is a flowchart illustrating an example of a raw material replenishment operation performed by the raw material supply device shown in Fig. 7.
[Fig. 9] Fig. 9 is a schematic diagram illustrating a configuration example of a raw material supply device according to a fourth embodiment.
[Fig. 10] Fig. 10 is a schematic diagram illustrating an operation example of the raw material supply device shown in Fig. 9.
[Fig. 11] Fig. 11 is a schematic diagram illustrating a configuration example of a raw material supply device according to a fifth embodiment.
[Fig. 12] Fig. 12 is a schematic diagram illustrating a configuration example of a raw material supply device according to a sixth embodiment.
[Fig. 13] Fig. 13 is a schematic diagram illustrating a configuration example of a raw material supply device according to a seventh embodiment.
[Fig. 14] Fig. 14 is a schematic diagram illustrating a configuration example of a light source apparatus according to another embodiment.
[Fig. 15] Fig. 15 is a schematic diagram illustrating a configuration example of a light source apparatus according to still another embodiment.

### Description of Embodiments

Hereinafter, embodiments according to the present invention will be described with reference to the accompanying drawings.

### <First embodiment>

### [Basic configuration of light source apparatus]

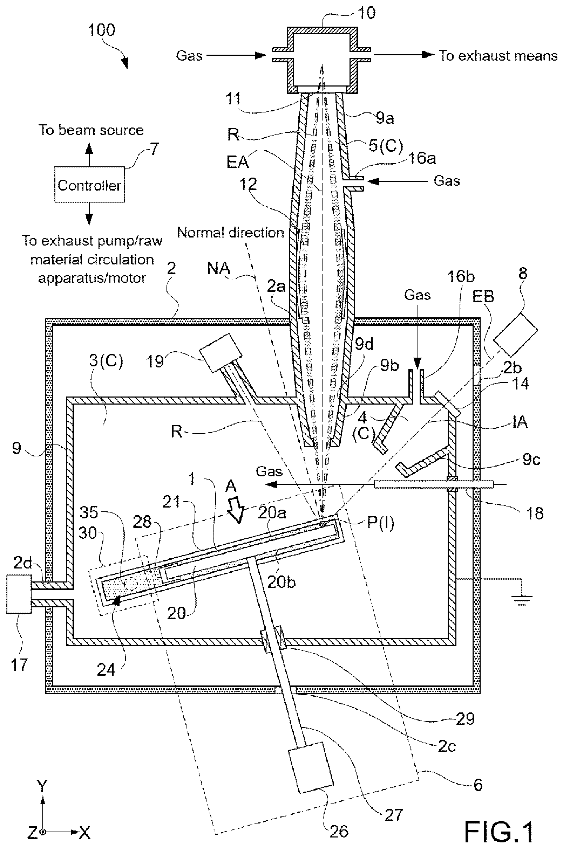

Fig. 1 is a schematic diagram illustrating a configuration example of a light source apparatus according to a first embodiment of the present invention.

A light source apparatus 100 is an LPP-based light source apparatus. In other words, the light source apparatus 100 is an apparatus that excites a plasma raw material 1 by irradiating the plasma raw material 1 with an energy beam EB to generate a plasma P, extracts radiation R emitted from the plasma P, and uses the extracted radiation R as a light source.

Note that in the present disclosure, the radiation R includes light (electromagnetic waves) radiated from the plasma P, such as light in a soft X-ray region, such as EUV light, and Hard X-rays having a higher energy.

In the case where EUV light is emitted as the radiation R, an EUV raw material is used as the plasma raw material 1. As a raw material for emitting EUV light, for example, liquid tin (Sn) or lithium (Li) is used. Although Sn and Li are solid at room temperature, they are used in the liquid state in the case where they are irradiated with the energy beam EB.

In the case where X-rays are emitted as the radiation R, an X-ray raw material is used as the plasma raw material 1. The X-ray raw material is, for example, a metal in a liquid state at room temperature. For example, gallium (Ga), a gallium alloy, or an Sn compound can be used as the X-ray raw material.

Fig. 1 illustrates a schematic cross section of the light source apparatus 100 when the light source apparatus 100 is cut along the horizontal direction at a predetermined height from its installation surface and viewed from above.

Hereinafter, the X direction is denoted as the left-right direction (the positive side of the X axis is the right side and the negative side is the left side), the Y direction is denoted as the front-rear direction (the positive side of the Y axis is the front side and the negative side is the rear side), and the Z direction is denoted as the height direction (the positive side of the Z axis is the upper side and the negative side is the lower side). Obviously, the application of the present technology is not limited to the direction in which the light source apparatus 100 is used.

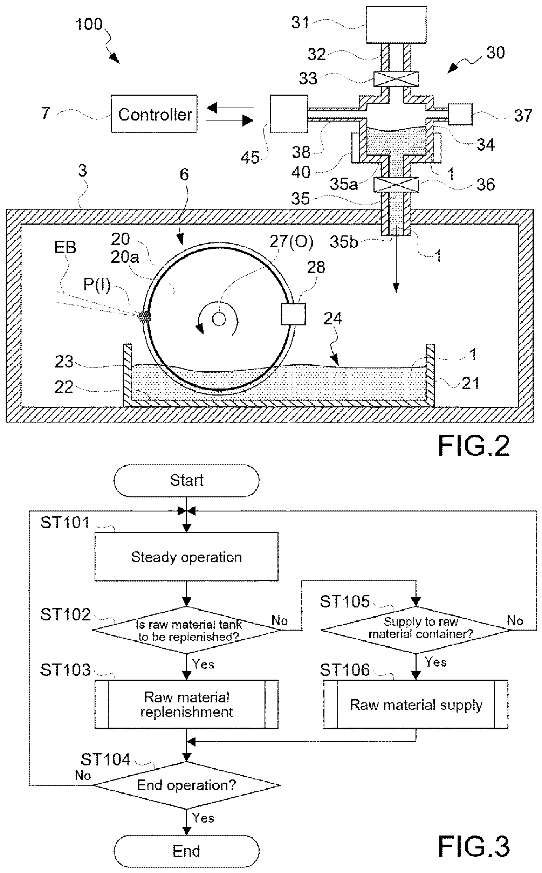

The light source apparatus 100 includes an enclosure 2, a vacuum chamber 3, an energy beam incident chamber 4, a radiation emission chamber 5, a plasma generation mechanism 6, a controller 7, and a raw material supply device 30. Note that in Fig. 1, the raw material supply device 30 is schematically illustrated by a fine dotted frame. The configuration of the raw material supply device 30 will be described below in detail with reference to Fig. 2 and the like.

The enclosure 2 includes an emission hole 2a formed in the front face of the enclosure 2, an incident hole 2b formed in the right side face thereof, a through-hole 2c formed in the rear face thereof, and a through-hole 2d formed in the left side face thereof. In the present embodiment, the radiation R is set to allow an emission axis EA to pass through the emission hole 2a in the front face and extend in the Y direction (front-rear direction). Further, the energy beam EB is set to allow an incident axis IA to extend from the incident hole 2b on the right side face toward the rear side at an oblique angle to the left.

As shown in Fig. 1, a beam source 8 that emits the energy beam EB is disposed outside the enclosure 2. Examples of the energy beam EB include an electron beam and a laser beam.

The light source apparatus 100 is provided with a chamber section C that includes a plurality of chambers. Specifically, the chamber section C includes the vacuum chamber 3, the energy beam incident chamber (hereinafter, simply referred to as the "incident chamber") 4, and the radiation emission chamber (hereinafter, simply referred to as the "emission chamber") 5. The incident chamber 4 is formed to be located on the incident axis IA of the energy beam EB, and the emission chamber 5 is formed to be located on the emission axis EA of the radiation R. Further, the vacuum chamber 3 is provided with a mechanism that generates the plasma P.

In the present embodiment, the chamber section C includes a chamber body 9, an outer protrusion 9a protruding from the front face of the chamber body 9 toward the front side, and two inner protrusions 9b and 9c protruding inward from the inner circumferential face of the chamber body 9. As shown in Fig. 1, an emission hole 9d is formed in the front face of the chamber body 9. The outer protrusion 9a is configured to protrude from the circumferential edge portion of the emission hole 9d in the chamber body 9. An inner protrusion 9b is configured to protrude inward from the circumferential edge portion of the emission hole 9d inside the chamber body 9.

The space surrounded by the outer protrusion 9a and the inner protrusion 9b serves as the emission chamber 5. The emission chamber 5 is provided with an opening (aperture) through which the radiation R passes at the front and rear ends.

A utilization device such as a mask inspection device is connected to the end portion of the emission chamber 5 on the front side (end portion of the outer protrusion 9a on the front side). In the example shown in Fig. 1, an application chamber 10 is connected as a chamber constituting part of the utilization device. A filter film 11 for physically separating a region where the plasma P is generated and the application chamber 10 from each other is provided between the emission chamber 5 and the application chamber 10. A collector (focusing mirror) 12 for guiding and focusing the radiation R that has entered the emission chamber 5 into the utilization device (inside the application chamber 10) is disposed inside the emission chamber 5.

An incident window 14 is formed in the right-front corner of the chamber body 9. The incident window 14 is formed along the incident axis IA of the energy beam EB, and in line with the incident hole 2b in the right side face of the enclosure 2.

An inner protrusion 9c is configured to protrude inside the right-front corner of the chamber body 9 along the incident axis IA of the energy beam EB from a position surrounding the incident window 14.

In the internal space of the chamber body 9, the space surrounded by the inner protrusion 9c serves as the incident chamber 4. The incident chamber 4 is provided with an opening (aperture) through which the energy beam EB passes at the end thereinside.

As shown in Fig. 1, gas injection channels 16a and 16b are respectively provided in the emission chamber 5 and the incident chamber 4, and gas is supplied to the emission chamber 5 and the incident chamber 4 from a gas supply device, which is omitted in the figure. A gas that has high transmittance to the radiation R is supplied to the emission chamber 5. A gas that has high transmittance to the energy beam EB is supplied to the incident chamber 4.

For example, argon or helium can be used as a gas that has high transmittance to both the energy beam EB and the radiation R.

By supplying gas, it is possible to set the pressure inside the emission chamber 5 and the incident chamber 4 to a pressure higher than the pressure inside the vacuum chamber 3, and prevent debris and the like from entering.

In the internal space of the chamber body 9, the space excluding the internal space of the inner protrusion 9b, which serves as the emission chamber 5, and the internal space of the inner protrusion 9c, which serves as the incident chamber 4, serves as the vacuum chamber 3. The chamber body 9 is connected to an exhaust pump 17. In the present embodiment, the vacuum chamber 3 corresponds to a reduced-pressure chamber.

In the present embodiment, a gas nozzle 18 is disposed to extend in the left-right direction toward the region between the incident axis IA and the emission axis EA. This allows the debris that has been released from the plasma P to move in a direction away from the incident axis IA and the emission axis EA.

The plasma generation mechanism 6 is a mechanism for generating the plasma P inside the vacuum chamber 3 and emitting the radiation R (X-rays, EUV light).

The plasma generation mechanism 6 includes a disk-shaped rotation body 20 for supplying raw materials, and a raw material container 21 that accommodates the liquid plasma raw material 1. The rotation body 20 and the raw material container 21 are disposed inside the vacuum chamber 3.

As shown in Fig. 1, the energy beam EB enters the disk-shaped rotation body 20. The rotation body 20 is disposed inside the vacuum chamber 3 such that an irradiation position I of the energy beam EB is located at the intersection of the incident axis IA and the emission axis EA. In the present embodiment, the rotation body 20 corresponds to a rotation body to be irradiated with an energy beam.

The raw material container 21 is provided such that the rotation body 20 is immersed therein, and supplies the liquid plasma raw material 1 to the rotation body 20. For example, the rotation body 20 is rotatably held while being immersed in the liquid plasma raw material 1 inside the raw material container 21, and the plasma raw material 1 adheres to the front surface of the rotation body 20. As described above, the raw material container 21 is provided inside the vacuum chamber 3, stores the liquid plasma raw material 1, and supplies the liquid plasma raw material 1 to the irradiation position I of the energy beam EB. In the present embodiment, the raw material container 21 is an example of a storage container, and corresponds to a raw material container. In addition, the configuration of the plasma generation mechanism 6 will be described below in detail.

The controller 7 controls the operation of each component provided in the light source apparatus 100.

For example, the controller 7 controls the operation of the beam source 8 and the exhaust pump 17. In addition, the controller 7 controls the operation of various motors, the raw material supply device 30, and the like, which will be described below.

As shown in Fig. 1, in the present embodiment, a radiation diagnosis section 19 is provided on the front side of the chamber body 9, in the area spatially communicated with the vacuum chamber 3. The radiation diagnosis section 19 measures the state of the radiation R emitted from the plasma P. Here, the state of the radiation R means the physical state of the radiation R, such as intensity, wavelength, and spectrum of the radiation R. The measurement results with the radiation diagnosis section 19 are used to diagnose the radiation R or to control the operation of the raw material supply device 30 described below.

Fig. 2 is a schematic diagram illustrating a configuration example of a plasma generation mechanism and a raw material supply device according to the first embodiment. Fig. 2 schematically illustrates a cross-sectional configuration example of the rotation body 20 viewed from the direction indicated by an arrow A in Fig. 1. Note that in Fig. 2, the enclosure 2, the energy beam incident chamber 4, and the radiation emission chamber 5 are omitted.

### [Basic configuration of plasma generation mechanism]

As shown in Fig. 1 and Fig. 2, the plasma generation mechanism 6 includes the rotation body 20, the raw material container 21, a motor 26, a shaft 27, and a skimmer 28.

The rotation body 20 is a disk-shaped member that rotates around a rotation axis O to supply the plasma raw material 1 to the plasma generation area. The rotation body 20 is typically disposed such that the rotation face is parallel to the vertical direction, i.e., the rotation axis O is parallel to the horizontal direction. Note that the rotation body 20 may be disposed such that the rotation axis O is inclined to the horizontal direction.

The rotation body 20 has a front surface 20a and a back surface 20b, and is disposed such that the energy beam EB enters the front surface 20a. The irradiation position I where the energy beam EB is incident is set at a predetermined position of the front surface 20a. Conversely, of the two main surfaces of the rotation body 20, the main surface on which the irradiation position I of the energy beam EB is set is the front surface 20a. The opposite main surface is the back surface 20b.

The rotation body 20 is made of a high-melting-point metal such as tungsten (W), molybdenum (Mo), and tantalum (Ta).

The raw material container 21 includes a bottom portion 22, an outer wall portion 23, and a storage portion 24. The bottom portion 22 is a portion forming the bottom of the raw material container 21. The outer wall portion 23 is a portion protruding upward so as to surround the bottom portion 22. The storage portion 24 is a region surrounded by the bottom portion 22 and the outer wall portion 23, opens upward, and stores the liquid plasma raw material 1. The liquid plasma raw material 1 is supplied from the raw material supply device 30 described below to the storage portion 24.

The lower side of the rotation body 20 is partially immersed in the plasma raw material 1 stored in the storage portion 24. The position of the rotation body 20 and the amount of the plasma raw material 1 stored in the storage portion 24 are set such that at least part of the front surface 20a of the rotation body 20 is immersed in the plasma raw material 1.

In the case where X-rays are emitted as the radiation R, an X-ray raw material is used as the plasma raw material 1. The X-ray raw material is a metal or a metal compound, which is in the form of liquid at room temperature. Examples of the X-ray raw material include gallium (Ga), a gallium alloy, and an Sn compound.

In the case where EUV light is emitted as the radiation R, an EUV raw material is used as the plasma raw material 1. Examples of the raw material that emits EUV light include tin (Sn) and lithium (Li) in the form of liquid.

Since Sn and Li are solid at room temperature, the raw material container 21 is provided with a temperature control means, which is omitted in the figure. For example, in the case where the EUV raw material is Sn, the raw material container 21 is maintained at a temperature above the melting point of Sn.

In the example shown in Fig. 1 and Fig. 2, the raw material container 21 is configured to have a length in the longitudinal direction longer than the diameter of the rotation body 20. The rotation body 20 is disposed in close proximity to one end side of the raw material container 21 in the longitudinal direction. Therefore, a region where the storage portion 24 is exposed when viewed from above is formed on the other end side of the raw material container 21 in the longitudinal direction, and the liquid plasma raw material 1 is supplied from above this region. In addition, the shape of the raw material container 21 is not limited. For example, the length of the raw material container 21 in the lateral direction may be longer than that in the example shown in Fig. 1. In this case, the storage portion 24 can be relatively widely exposed in the lateral direction. The liquid plasma raw material 1 may be supplied from above such a region.

Note that the rotation body 20 and the raw material container 21 are configured such that the region where the storage portion 24 is exposed and the plasma raw material 1 is supplied and the incident axis IA of the energy beam EB or the emission axis EA of the radiation R do not overlap each other in plan view from above.

The shaft 27 of the motor 26 is connected to the center of the back surface 20b of the rotation body 20. The controller 7 controls the operation of the motor 26, which allows the rotation body 20 to rotate via the shaft 27.

The shaft 27 is a pillar-shaped member extending in a direction orthogonal to the front surface 20a of the rotation body 20. The central axis of the shaft 27 is the rotation axis O of the rotation body 20 and the motor 26.

The shaft 27 passes through the through-hole 2c in the enclosure 2, and is introduced into the vacuum chamber 3 via a mechanical seal 29. The shaft 27 is disposed to avoid being in contact with the enclosure 2 (through-hole 2c). The mechanical seal 29 allows the shaft 27 to rotate while maintaining a reduced-pressure atmosphere in the vacuum chamber 3.

As described above, the rotation body 20 is disposed to be immersed in the plasma raw material 1 stored in the raw material container 21. In this state, when the rotation body 20 rotates around the shaft 27 (rotation axis O), the plasma raw material 1 that has spread on the front surface 20a and has been adhered to the front surface 20a is lifted from the raw material container 21. This method allows the plasma raw material 1 to be applied over the entire circumference of the front surface 20a. The plasma raw material 1 that has been applied to the front surface 20a is transported to the irradiation position I of the energy beam EB with the rotation of the rotation body 20. Thus, in the present embodiment, the raw material container 21, the motor 26, and the shaft 27 allow the plasma raw material 1 to be supplied to the rotation body 20.

As shown in Fig. 2, in the present embodiment, the irradiation position I of the energy beam EB is provided in the vicinity of the circumferential edge portion of the front surface 20a of the rotation body 20. The configurations and operations of the motor 26 and the shaft 27 are appropriately designed to supply this irradiation position I with the plasma raw material 1.

The skimmer 28 is provided at a predetermined position in the circumferential edge portion of the rotation body 20 as a thickness adjustment member for adjusting the thickness of the plasma raw material 1 to be supplied onto the front surface 20a of the rotation body 20 to a predetermined thickness.

The skimmer 28 is a structure having, for example, a channel structure, and is disposed with a predetermined gap apart from the rotation body 20 in a manner to sandwich the rotation body 20 thereinside. The skimmer 28 serves as a scraper that scrapes off part of the plasma raw material 1 that has been applied to the front surface 20a of the rotation body 20.

The interval between the front surface 20a of the rotation body 20 and the skimmer 28 corresponds to the thickness of the plasma raw material 1 at the irradiation position I of the energy beam EB set on the front surface 20a of the rotation body 20. The skimmer 28 is positioned to allow the thickness of the plasma raw material 1 at the irradiation position I to be adjusted to a predetermined thickness.

The interval between the front surface 20a of the rotation body 20 and the skimmer 28 is set appropriately. This allows the liquid plasma raw material 1 that has been applied to the rotation body 20 in the raw material storage portion of the raw material container 21 to be adjusted such that the liquid plasma raw material 1 has a predetermined thickness on the rotation body 20 when passing through the skimmer 28 due to the rotation of the rotation body 20.

The plasma raw material 1 on the rotation body 20, the thickness of which has been adjusted by the skimmer 28, is transported to the irradiation position I of the energy beam EB along with the rotation of the rotation body 20. In other words, the direction of rotation of the rotation body 20 is a direction in which the plasma raw material 1 on the rotation body 20 passes through the skimmer 28 and then is transported to the irradiation position I. The plasma raw material 1 on the rotation body 20 is irradiated with the energy beam EB at the irradiation position I to generate the plasma P.

The skimmer 28 makes it possible to nearly uniformly supply the plasma raw material 1 to the irradiation position I. Stabilizing the thickness of the plasma raw material 1 at the irradiation position I is capable of stabilizing the intensity of the radiation R radiated from the plasma P.

### [Basic configuration of raw material supply device]

As shown in Fig. 2, the raw material supply device 30 is connected to the vacuum chamber 3 of the light source apparatus 100. The raw material supply device 30 is a device that supplies, to the inside of the vacuum chamber 3, the plasma raw material 1 that is transformed into plasma to generate the radiation R when irradiated with the energy beam EB.

The raw material supply device 30 includes a raw material supply section 31, a raw material replenishment pipe 32, a replenishment valve 33, a raw material tank 34, a raw material supply pipe 35, and a supply valve 36. The raw material supply device 30 includes a pressure gauge 37 and an exhaust pipe 38.

In the raw material supply device 30, the plasma raw material 1 for replenishment is supplied from the raw material supply section 31. The plasma raw material 1 for replenishment is introduced into the raw material tank 34 via the raw material replenishment pipe 32 and the replenishment valve 33.

In the raw material tank 34, the plasma raw material 1 is maintained in the liquid state. The liquid plasma raw material 1 held by the raw material tank 34 flows into the storage portion 24 of the raw material container 21 in the vacuum chamber 3 via the raw material supply pipe 35 and the supply valve 36.

As described above, the raw material supply device 30 is provided with the raw material tank 34 that maintains the plasma raw material 1 in the liquid state. The raw material supply device 30 is configured to be capable of supplying the plasma raw material 1 in the liquid state to the storage portion 24 of the raw material container 21 provided inside the vacuum chamber 3.

Therefore, in the light source apparatus 100, the liquid plasma raw material 1 is stored in the raw material container 21 and the raw material tank 34. Of these, the storage amount in the raw material tank 34 only needs to be an amount capable of supplying the plasma raw material consumed during the operation of the apparatus. Thus, the storage amount in the raw material tank 34 may be less than the storage amount in the raw material container 21, for example. Further, it is unnecessary to fill a pipe or the like for circulating the plasma raw material 1 with the plasma raw material 1 in the liquid state. For this reason, it is possible to reduce the storage amount of the plasma raw material 1.

In the raw material supply device 30, the plasma raw material 1 in the raw material tank 34 is maintained in the liquid state. The raw material tank 34 has a small capacity and is capable of heating the plasma raw material 1 with relatively small electric power and keeping the plasma raw material 1 warm. This allows to reduce consumption energy.

In the raw material supply device 30, the liquid plasma raw material can be supplied to the raw material container 21 as necessary. As a result, it is possible to stably supply a plasma raw material.

Note that in the present disclosure, introducing the plasma raw material 1 into the raw material tank 34 is described as replenishing, and causing the liquid plasma raw material to flow from the raw material tank 34 into the raw material container 21 is described as supplying.

Hereinafter, the configurations of the respective sections of the raw material supply device 30 will be specifically described.

The raw material supply section 31 supplies the plasma raw material 1 for replenishing the raw material tank 34 (plasma raw material for replenishment). The raw material supply section 31 is appropriately configured in accordance with the type of plasma raw material 1 for replenishment. Typically, the raw material supply section 31 is configured as a mechanism for accommodating the plasma raw material 1 and draining the necessary amount of the plasma raw material 1.

The raw material replenishment pipe 32 connects the raw material supply section 31 and the raw material tank 34 and causes the plasma raw material 1 for replenishment supplied from the raw material supply section 31 to pass therethrough.

The replenishment valve 33 is provided to the raw material replenishment pipe 32 and maintains the reduced-pressure atmosphere of the raw material tank 34. As the replenishment valve 33, for example, a mechanical valve that opens and closes the raw material replenishment pipe 32 such that the plasma raw material 1 for replenishment can pass therethrough is used.

In the present embodiment, the raw material supply section 31 corresponds to a supply section, the raw material replenishment pipe 32 corresponds to a replenishment pipe, and the replenishment valve 33 corresponds to a replenishment valve mechanism. The raw material supply section 31, the raw material replenishment pipe 32, and the replenishment valve 33 serve as a raw material replenishment section that replenishes a raw material tank with a plasma raw material.

The plasma raw material 1 for replenishment to be supplied to the raw material tank 34 is the plasma raw material 1 in the solid state (solid phase) or the liquid state (liquid phase).

As described above, the plasma raw material 1 for generating EUV light is a metal raw material (Sn, Li, or the like) that is solid at room temperature. In this case, as the plasma raw material 1 for replenishment, a metal object obtained by processing Sn or Li into a sphere or pellet is used. The plasma raw material 1 for generating the radiation R is a metal raw material or a metal compound (Ga, a Ga alloy, an Sn compound, or the like) that is liquid at room temperature. In this case, as the plasma raw material 1 for replenishment, the metal raw material in the liquid state is used as it is.

The raw material supply section 31, the raw material replenishment pipe 32, and the replenishment valve 33 are each configured such that the raw material tank 34 can be replenished with the plasma raw material 1 in the solid state or liquid state.

Hereinafter, a case where a solid metal raw material is used as the plasma raw material 1 for replenishment will be mainly described.

The raw material tank 34 is provided outside the vacuum chamber 3 and holds the plasma raw material 1 in the liquid state. In other words, the raw material tank 34 is configured to be capable of storing the liquid plasma raw material 1 thereinside. The raw material replenishment pipe 32 and the raw material supply pipe 35 are connected to the raw material tank 34 so as to be communicated with the inside of the raw material tank 34.

The raw material tank 34 includes a heating mechanism 40. The heating mechanism 40 is a mechanism for heating the plasma raw material 1 in the raw material tank 34. As the heating mechanism 40, for example, a heater using a heating wire or the like is used.

The heating by the heating mechanism 40 maintains the plasma raw material 1 to be supplied from the raw material replenishment pipe 32 to the raw material tank 34 at a predetermined temperature such that the plasma raw material 1 is in the liquid state, regardless of the state at the time of replenishment (a solid state or a liquid state). For example, in the case where the plasma raw material 1 is Sn, the plasma raw material 1 in the raw material tank 34 is maintained at a temperature of the melting point of Sn or higher. As a result, it is possible to maintain the plasma raw material 1 in the raw material tank 34 in the liquid-phase state. Note that a temperature control mechanism capable of adjusting the temperature of the raw material tank 34 may be provided instead of the heating mechanism 40.

The capacity of the raw material tank 34 is set to, for example, the amount of the plasma raw material 1 to be supplied to the raw material container 21 by one time. Typically, the raw material tank 34 is configured to be capable of storing the plasma raw material 1 whose amount is 1.5 to 3 times as large as the amount of one supply. By miniaturizing the raw material tank 34 itself, it is possible to reduce the consumption energy during the heating operation of the heating mechanism 40.

As shown in Fig. 2, the raw material tank 34 is disposed above the vacuum chamber 3. This allows the liquid plasma raw material 1 to flow into the vacuum chamber 3 by its own weight. As a result, it is possible to simplify the apparatus configuration.

The exhaust pipe 38 that connects the raw material tank 34 and a vacuum exhaust device 45 to each other is connected to the raw material tank 34. The vacuum exhaust device 45 is a device for exhausting the inside of the raw material tank 34 to obtain a reduced-pressure atmosphere, and includes a vacuum pump or the like. In the present embodiment, the vacuum exhaust device 45 corresponds to a predetermined exhaust mechanism.

The pressure gauge 37 for measuring the pressure inside the raw material tank 34 is further connected to the raw material tank 34. The measurement value of the pressure gauge 37 is output to the controller 7. This allows the raw material supply device 30 to operate while referring to the pressure inside the raw material tank 34.

In addition, the raw material tank 34 may be appropriately provided with a liquid level sensor that detects the liquid surface level of the liquid plasma raw material 1, a temperature sensor that detects the temperature of the liquid plasma raw material 1, or the like.

The raw material supply pipe 35 connects the raw material tank 34 and the vacuum chamber 3 to each other and supplies the liquid plasma raw material 1 held in the raw material tank 34 to the raw material container 21 provided inside the vacuum chamber 3. In the present embodiment, since the raw material tank 34 is disposed outside the vacuum chamber 3, the raw material supply pipe 35 penetrates the wall of the vacuum chamber 3 to connect the raw material tank 34 and the vacuum chamber 3 to each other.

The raw material supply pipe 35 includes an inlet 35a through which the liquid plasma raw material flows from the raw material tank 34, and an outlet 35b through which the liquid plasma raw material 1 flows out. The supply valve 36 described below is provided between the inlet 35a and the outlet 35b.

In the present embodiment, the raw material supply pipe 35 corresponds to a supply pipe.

The raw material supply pipe 35 is provided to penetrate a wall portion of the raw material tank 34 and a wall portion of the vacuum chamber 3 and spatially connect the raw material tank 34 and the vacuum chamber 3 to each other. The penetration portion between the raw material supply pipe 35 and the wall portion of the vacuum chamber 3 is appropriately sealed to maintain the reduced-pressure atmosphere inside the vacuum chamber.

In the example shown in Fig. 2, the inlet 35a of the raw material supply pipe 35 is connected to the bottom in the raw material tank 34. Note that the position at which the inlet 35a is provided is not limited. For example, the inlet 35a may be provided on the side surface in the raw material tank 34.

The outlet 35b of the raw material supply pipe 35 is disposed to face the upper surface of the bottom portion 22 of the raw material container 21 (bottom of the storage portion 24). In other words, the outlet 35b of the raw material supply pipe 35 is disposed above the storage portion 24 formed in the raw material container 21. Therefore, the raw material supply pipe 35 supplies the liquid plasma raw material 1 to the raw material container 21 from above the raw material container 21.

In the example shown in Fig. 1 and Fig. 2, a region where the storage portion 24 is exposed is formed along the longitudinal direction of the raw material container 21. The raw material supply device 30 is disposed such that the outlet 35b of the raw material supply pipe 35 is located above the region where the storage portion 24 is exposed.

The supply valve 36 is provided to the raw material supply pipe 35 and opens and closes the flow of the liquid plasma raw material 1. As the supply valve 36, for example, a valve including a mechanical opening/closing mechanism, such as a needle valve and a ball valve, is used. The supply valve 36 is configured such that the opening/closing can be automatically controlled by a servo motor or the like.

The specific configuration of the supply valve 36 is not limited. An arbitrary opening/closing mechanism capable of controlling the flow of the liquid plasma raw material 1 may be used. In the present embodiment, the supply valve 36 is an example of a supply valve mechanism.

As described above, in the present embodiment, by providing the mechanical supply valve 36 to the raw material supply pipe 35, the supply of the liquid plasma raw material 1 from the raw material tank 34 to the raw material container 21 through the raw material supply pipe 35 is controlled. Using the supply valve 36 makes it possible to switch the operation of starting and stopping the supply of the liquid plasma raw material 1 in a relatively short time, for example. As a result, it is possible to finely control the raw material supply to the raw material container 21. In the present embodiment, the raw material supply pipe 35 and the supply valve 36 serve as a supply controller.

The operation of the raw material supply device 30 is controlled by using, for example, the controller 7 described above. The controller 7 is configured to be capable of controlling the operations of the raw material supply section 31, the replenishment valve 33, the heating mechanism 40 of the raw material tank 34, the vacuum exhaust device 45, the pressure gauge 37, the supply valve 36, and the like. Note that a dedicated arithmetic unit for controlling the raw material supply device 30 may be provided separately from the controller 7.

### [Valve structure of raw material supply device]

The operation of replenishing the raw material tank 34 with the plasma raw material 1 supplied from the raw material supply section 31 is generally performed under an atmospheric pressure atmosphere. In other words, the raw material supply section 31 supplies the plasma raw material 1 to the raw material tank 34 while the raw material tank 34 is open to the atmosphere.

Meanwhile, in the case where the plasma raw material 1 that is in the liquid state by being heated by the heating mechanism 40 (or a temperature control mechanism) inside the raw material tank 34 is supplied to the raw material container 21 in the vacuum chamber 3, the atmosphere inside the raw material tank 34 needs to be equivalent to the reduced-pressure atmosphere inside the vacuum chamber 3.

For this reason, the replenishment valve 33 is provided to the raw material replenishment pipe 32 connecting the raw material supply section 31 and the inside of the raw material tank 34 to each other, and the supply valve 36 is provided to the raw material supply pipe 35 connecting the inside of the raw material tank 34 and the inside of the vacuum chamber 3 to each other. In this way, the two valves (the replenishment valve 33 and the supply valve 36) provided between the atmospheric pressure atmosphere and the vacuum chamber 3 constitute a load lock mechanism in the raw material supply device 30.

With such a configuration, it is possible to dispose the raw material supply section 31 and the raw material tank 34 outside the vacuum chamber 3. Further, it is possible to perform the operation of filling the raw material supply device 30 itself with the plasma raw material 1 while operating the light source apparatus 100.

The inside of the raw material tank 34 is exhausted by the vacuum exhaust device 45 connected via the exhaust pipe 38. As a result, while the replenishment valve 33 is closed, the raw material tank 34 has a reduced-pressure atmosphere and deterioration of the liquid plasma raw material 1 held by the raw material tank 34 due to oxidation or the like can be suppressed. As a result, it is possible to prevent the raw material supply pipe 35 from being clogged with the oxidized plasma raw material 1 and the deteriorated plasma raw material 1 from being supplied to the raw material container 21.

Even in the case where a channel through which gas passes is formed in the raw material supply pipe 35 connecting the raw material tank 34 and the vacuum chamber 3 to each other, by making the inside of the raw material tank 34 have a reduced-pressure atmosphere, it is possible to prevent the reduced-pressure atmosphere inside the vacuum chamber 3 from being deteriorated.

### [Basic operation of raw material supply device]

Fig. 3 is a flowchart illustrating an operation example of the raw material supply device shown in Fig. 2. The control of the raw material supply device 30 shown in Fig. 3 is automatic control executed by the controller 7.

In the raw material supply device 30, the controller 7 executes a steady operation (Step 101). The steady operation is an operation executed when a raw material replenishment operation and a raw material supply operation are not executed. The raw material replenishment operation is an operation of replenishing the raw material tank 34 with the plasma raw material 1. The raw material supply operation is an operation of supplying the plasma raw material 1 from the raw material tank 34 to the raw material container 21.

During the steady operation, both the replenishment valve 33 and the supply valve 36 are in the closed state, and the following operation is executed. The raw material tank 34 is exhausted by the vacuum exhaust device 45 and the liquid plasma raw material 1 is maintained at a constant temperature by the heating mechanism 40.

Next, whether or not to replenish the raw material tank 34 with the plasma raw material 1 is determined (Step 102). This determination is a process of determining whether or not the amount of the plasma raw material 1 in the raw material tank 34 has been reduced to a predetermined amount.

The amount of the plasma raw material 1 accommodated in the raw material tank 34 is determined by detecting the liquid surface level of the liquid plasma raw material 1 in the raw material tank 34, for example. Specifically, the controller 7 monitors the amount of the liquid plasma raw material 1 accommodated in the raw material tank 34 by a predetermined detection mechanism (not shown). As the detection mechanism, a level sensor using a thermocouple, a resistance element, or the like is used. Alternatively, a distance measurement sensor using a laser beam, or the like may be used.

In the case where the amount of the plasma raw material 1 in the raw material tank 34 is reduced to the predetermined amount, it is determined that the raw material tank 34 is to be replenished with the plasma raw material 1 (Yes in Step 102), a raw material replenishment operation is started (Step 103).

When the raw material replenishment operation is completed, whether or not to finish the entire operation of the raw material supply device 30 is determined (Step 104). For example, in the case where the light source apparatus 100 is stopped or maintenance or the like of the raw material supply device 30 is performed, it is determined that the entire operation is to be finished (Yes in Step 104). Meanwhile, in the case where the entire operation is not to be finished, the processing returns to Step 101 and the steady operation is started.

In the case where the amount of the plasma raw material 1 in the raw material tank 34 is not reduced to the predetermined amount, it is determined that the raw material tank 34 is not to be replenished with the plasma raw material 1 (No in Step 102), whether or not to supply the plasma raw material 1 to the raw material container 21 is determined (Step 105). This determination is the process of whether or not to execute a raw material supply operation from the raw material tank 34 to the raw material container 21.

For example, in the case where the remaining amount of the plasma raw material 1 on the raw material container 21 is detected and the detection result is lower than a predetermined threshold value, it is determined that a raw material supply operation is to be executed. For example, the light source apparatus 100 is used as part of an apparatus such as a production apparatus and a detection apparatus. During the period in which the apparatus is not operated, i.e., the light source apparatus 100 is not operated, the liquid surface of the plasma raw material 1 stored in the raw material container 21 is observed by means such as a laser displacement meter. Whether or not to execute a raw material supply operation is determined in accordance with this observation result. Note that the raw material supply is performed in the liquid state and thus is completed in a shorter period of time as compared with the supply in the solid state.

For example, a liquid level sensor capable of measuring the liquid surface of the plasma raw material 1 in a target area where the storage portion 24 of the raw material container 21 is exposed is provided. The liquid level sensor observes fluctuations in the liquid surface of the plasma raw material 1, and the timing of the raw material supply operation is determined in accordance with the change in the liquid surface. The configuration of the liquid level sensor is not limited. For example, an arbitrary sensor capable of detecting the liquid surface level of the plasma raw material is available. The emission intensity of the radiation R or the like may be monitored, and a raw material supply operation may be performed in the case where it is determined that the mission intensity has been reduced. Alternatively, a sensor that observes the light intensity of the plasma P separately from the radiation R may be provided, and the conversion efficiency to the radiation R may be observed.

If the reduction amount of the plasma raw material 1 according to the emission time and number of pulses is known, a raw material supply operation may be executed in accordance with the emission time and the number of pulses. Simply, the next raw material supply operation may be executed in the case where predetermined time has elapsed after the previous raw material supply operation is executed. In addition, the method of determining whether or not to execute a raw material supply operation is not limited.

In the case where it is determined that the plasma raw material 1 is to be supplied from the raw material tank 34 to the raw material container 21 (Yes in Step 105), a raw material supply operation is started (Step 106). When the raw material supply operation is completed, whether or not to finish the entire operation of the raw material supply device 30 is determined (Step 104), similarly to when the raw material replenishment operation is completed.

In the case where it is determined that the plasma raw material 1 is not to be supplied from the raw material tank 34 to the raw material container 21 (No in Step 105), the processing returns to Step 101 and the steady operation is started.

### [Raw material replenishment operation]

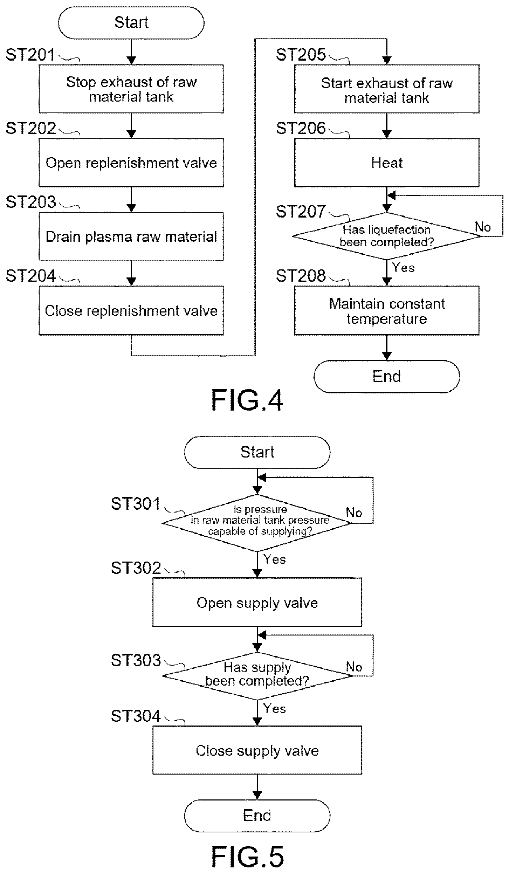

Fig. 4 is a flowchart illustrating an example of the raw material replenishment operation executed by the raw material supply device. The processing shown in Fig. 4 is the internal processing of Step 103 in Fig. 3.

The controller 7 performs the following control in the case where the raw material tank 34 is replenished with the plasma raw material 1.

First, the exhaust of the raw material tank 34 is stopped from the state where the steady operation is being executed (Step 201). For example, the exhaust pipe 38 is closed. Alternatively, the vacuum exhaust device 45 being driven is stopped. As a result, the exhaust of the raw material tank 34 is stopped.

Note that a Step of cooling the raw material tank 34 may be provided before executing Step 201. In this case, for example, the plasma raw material 1 may be cooled to be a solid state, or the temperature may be lowered in the range in which the liquid state is maintained. By cooling the raw material tank 34, it is possible to prevent the plasma raw material 1 stored in the raw material tank 34, such as tin, from being oxidized.

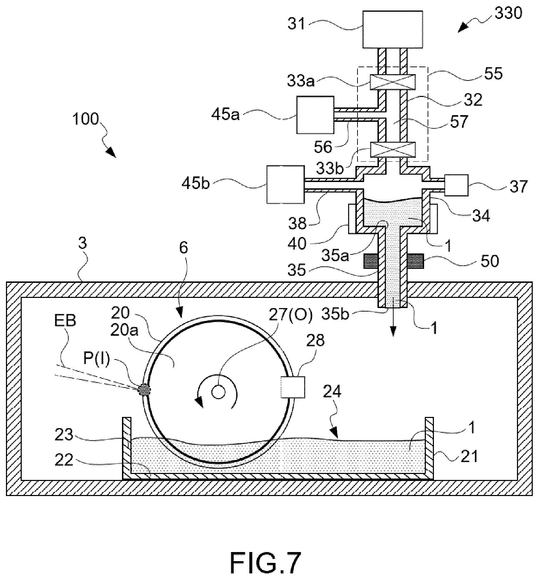

However, in the configuration including a load lock mechanism on the raw material replenishment side (see Fig. 7 or the like), since the raw material tank 34 is maintained in a reduced-pressure atmosphere, such cooling of the raw material tank 34 is unnecessary.

Next, the replenishment valve 33 is controlled such that the replenishment valve 33 is in the opened state (Step 202). At this time, the supply valve 36 maintains the closed state. When the replenishment valve 33 is opened, the inside of the raw material tank 34 is open to the atmosphere and the plasma raw material 1 for replenishment can be supplied.

Next, the raw material supply section 31 is controlled to drain a predetermined amount of the plasma raw material 1 (Step 203). The plasma raw material 1 supplied from the raw material supply section 31 is supplied to the raw material tank 34 through the raw material replenishment pipe 32 and the replenishment valve 33.

The plasma raw material 1 supplied from the raw material supply section 31 to the raw material tank 34 may be one of a liquid state and a solid state. For example, in the case of supplying the plasma raw material 1 in the solid state, the raw material supply section 31 and the replenishment valve 33 can be configured with a relatively simple structure.

Assumption is made that the plasma raw material 1 in the solid state is supplied.

Next, the replenishment valve 33 is controlled such that the replenishment valve 33 is in the closed state (Step 204). When Step 202 is executed, both the replenishment valve 33 and the supply valve 36 are in the closed state and the inside of the raw material tank 34 has a space independent from the atmospheric pressure atmosphere and the reduced-pressure atmosphere of the vacuum chamber 3.

Next, the exhaust of the raw material tank 34 is started (Step 205). For example, the exhaust pipe 38 that has been closed is opened. Alternatively, the operation of the vacuum exhaust device 45 is started. As a result, the exhaust of the raw material tank 34 is started.

Next, the raw material tank 34 is heated by the heating mechanism 40 to heat the plasma raw material 1 accommodated in the raw material tank 34 (Step 206). For example, the inside of the raw material tank 34 is heated by the heating mechanism 40 such that the plasma raw material 1 in the solid state supplied to the raw material tank 34 liquefies. For example, the controller 7 controls the heating mechanism 40 such that the output of the heating mechanism 40 is larger than the output for maintaining the constant temperature during the steady operation.

Note that the heating operation executed by the heating mechanism 40 may be started in the case where the pressure inside the raw material tank 34 has been reduced to be lower than a predetermined value.

Next, whether or not the liquefaction has been completed is determined (Step 207). The controller 7 monitors the state of the plasma raw material 1 in the raw material tank 34 by a predetermined detection mechanism (not shown) and detects that the plasma raw material 1 has all been in the liquid state.

For example, as the detection mechanism, the sensor that detects the liquid surface level of the plasma raw material 1 described with reference to Step 102 in Fig. 3 is used. In this case, the liquid surface level inside the raw material tank 34 in the case where a predetermined amount of the plasma raw material 1 in the solid state is supplied and the plasma raw material 1 has all been in the liquid state is stored in advance. In the case where the liquid surface level detected by the detection mechanism has reached the stored liquid surface level, it is determined that the plasma raw material 1 in the raw material tank 34 has all been in the liquid state.

For example, as the detection mechanism, a temperature sensor that measures the temperature of the plasma raw material 1 may be used. In this case, it is determined that the plasma raw material 1 in the raw material tank 34 has all been in the liquid state in the case where the temperature of the plasma raw material 1 in the raw material tank 34 has exceeded a predetermined threshold value or there is no temperature change.

In the case where it is determined that the liquefaction has not been completed (No in Step 207), the determination processing of Step 207 is repeatedly executed.

In the case where the liquefaction has been completed (Yes in Step 207), the heating mechanism 40 is controlled to maintain the raw material tank 34 at a constant temperature (Step 208). As a result, the liquid plasma raw material 1 supplied until the necessary amount is reached is held in the raw material tank 34 at a constant temperature.

### [Raw material supply operation]

Fig. 5 is a flowchart illustrating an example of the raw material supply operation executed by the raw material supply device. The processing shown in Fig. 5 is the internal processing of Step 106 in Fig. 3.

The controller 7 performs the following control in the case where the plasma raw material 1 is supplied from the raw material tank 34 to the raw material container 21.

First, whether or not the pressure in the raw material tank 34 is a pressure capable of supplying the plasma raw material 1 is determined (Step 301). The controller 7 receives pressure information transmitted from the pressure gauge 37 connected to the raw material tank 34 and determines whether or not the pressure inside the raw material tank 34 is nearly equivalent to the pressure inside the vacuum chamber 3. Note that the controller 7 reads the pressure inside the vacuum chamber 3 by, for example, a pressure gauge that measures the pressure inside the vacuum chamber 3, which is not shown in the figure.

For example, in the case where the pressure inside the raw material tank 34 falls within a predetermined pressure range around the pressure inside the vacuum chamber 3, it is determined that the plasma raw material 1 can be supplied.

For example, it may be determined that the plasma raw material 1 can be supplied in the case where the difference between the pressure inside the raw material tank 34 and the pressure inside the vacuum chamber 3 is a predetermined threshold value or less.

In the case where it is determined that the pressure inside the raw material tank 34 is not a pressure capable of supplying the plasma raw material 1 (No in Step 301), the determination processing of Step 301 is repeatedly executed. During this time, the exhaust operation of the raw material tank 34 is continued.

In the case where it is determined that the pressure inside the raw material tank 34 is a pressure capable of supplying he plasma raw material 1 (Yes in Step 301), the supply valve 36 is controlled such that the supply valve 36 is in the opened state (Step 302). At this time, the replenishment valve 33 maintains the closed state and the exhaust of the raw material tank 34 through the exhaust pipe 38 is continued.

When the supply valve 36 is opened, the liquid plasma raw material 1 accommodated in the raw material tank 34 passes through the raw material supply pipe 35 and the supply valve 36 and flows into the vacuum chamber 3. The liquid plasma raw material 1 flowing out of the outlet 35b of the raw material supply pipe 35 is supplied to the storage portion 24 of the raw material container 21.

Next, whether or not the supply of the liquid plasma raw material 1 from the raw material tank 34 to the raw material container 21 has been completed is determined (Step 303).

For example, in the case where the liquid surface level of the raw material tank 34 has been reduced by a certain amount, it is determined that the supply has been completed. For example, it may be determined that the supply has been completed in the case where the supply valve 36 has been left open for a certain period of time. In addition, the method of determining the supply completion is not limited.

In the case where it is determined that the supply of the plasma raw material 1 has not been completed (No in Step 303), the determination processing of Step 303 is repeatedly executed. During this time, the liquid plasma raw material 1 is supplied from the raw material tank 34 to the raw material container 21.

In the case where it is determined that the supply of the plasma raw material 1 has been completed (Yes in Step 303), the supply valve 36 is controlled such that the supply valve 36 is in the closed state (Step 304). Since the supply valve 36 is closed, the supply of the liquid plasma raw material 1 is stopped.

After that, the processing proceeds to Step 101 in Fig. 2, and the steady operation is maintained until the next raw material replenishment operation or the raw material supply operation is executed.

As described above, in the raw material supply device 30 according to the present embodiment, the plasma raw material 1 held in the liquid state inside the raw material tank 34 is supplied to the raw material container 21 inside the vacuum chamber 3 through the raw material supply pipe 35 while maintaining the liquid state. The supply of the liquid plasma raw material 1 through the raw material supply pipe 35 is controlled by the raw material supply pipe 35 and the supply valve 36 (supply controller). As a result, it is possible to supply the liquid plasma raw material 1 to the raw material container 21 without circulating the liquid plasma raw material 1 as necessary. As a result, it is possible to reduce the storage amount of plasma raw material, reduce energy consumption, and stably supply a plasma raw material.

As a method of supplying the liquid plasma raw material 1 to the raw material container 21 disposed in vacuum, a method of using a circulation mechanism for circulating the liquid plasma raw material 1 is conceivable. In this method, a pipe for causing the plasma raw material 1 to flow into and out of the raw material container 21, another container for supplying a sufficient amount of the plasma raw material 1 to the inside of the circulation path, and the like are necessary. For this reason, a large amount of the liquid plasma raw material is necessary. In addition, consumption energy presumably increases in order to maintain a large amount of the plasma raw material in the liquid state.

As a method that does not use such a circulation mechanism, for example, a method of supplying the plasma raw material 1 in the solid state to the raw material container 21 is conceivable. This method needs to liquefy the plasma raw material 1 in the solid state in the raw material container 21 and there is a possibility that the temperature of the plasma raw material 1 that has been originally stored in the raw material container 21 changes. As a result, the viscosity and the like of the plasma raw material 1 in the raw material container 21 changes, and the thickness and the like of the plasma raw material 1 on the front surface 20a of the rotation body 20 presumably change. In this case, there is a possibility that the light emission operation becomes unstable. For this reason, when supplying the plasma raw material 1 in the solid state, for example, it is necessary to stop the light emission operation.

The raw material supply device 30 according to the present invention is configured to hold the liquid plasma raw material 1 in the raw material tank 34. In addition, a mechanism (supply valve or the like) capable of controlling the flow of the liquid plasma raw material 1 is provided. As a result, when the amount of the plasma raw material 1 stored in the raw material container 21 is reduced and the plasma raw material 1 is newly supplied, it is possible to properly supply the plasma raw material 1 in the liquid state.

In the raw material supply device 30, basically, the plasma raw material 1 in the raw material tank 34 only needs to be maintained in the liquid state. Meanwhile, the state of the plasma raw material 1 to be supplied to the raw material tank 34 may be, for example, the solid state. The amount of the plasma raw material 1 to be supplied to the raw material container 21 is sufficiently smaller than the entire capacity of the raw material container 21. For this reason, the storage amount of the raw material tank 34 may be, for example, sufficiently smaller than that of the raw material container 21. In addition, it is unnecessary to maintain a large amount of the plasma raw material in the liquid state, and it is possible to sufficiently reduce the consumption energy.

Since the liquid plasma raw material 1 is directly supplied to the raw material container 21, the temperature changes in the plasma raw material 1 inside the raw material container 21 are suppressed, and it is possible to maintain the temperature and the state of viscosity and the like of the plasma raw material 1 stored in the raw material container 21. As a result, it is possible to stably supply the plasma raw material 1 in the liquid state to the irradiation position I of the energy beam EB set on the front surface 20a of the rotation body 20 without interrupting the operation of the light source apparatus 100. As a result, it is possible to realize a light source apparatus capable of stably outputting the radiation R for a long time, and the like.

### <Second embodiment>

A light source apparatus according to a second embodiment of the present invention will be described. In the following description, the description will be omitted or simplified for the parts similar to the configuration and effect of the light source apparatus 100 described in the above embodiment.

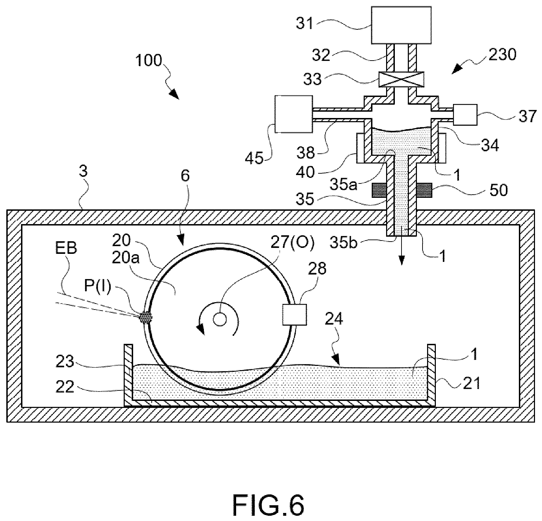

Fig. 6 is a schematic diagram illustrating a configuration example of a raw material supply device according to the second embodiment. A raw material supply device 230 includes a temperature control mechanism 50 instead of the supply valve 36 of the raw material supply device 30 described with reference to Fig. 2. Other configurations are similar to those of the raw material supply device 30 shown in Fig. 2.

The temperature control mechanism 50 is a mechanism that is provided to the raw material supply pipe 35 and adjust the temperature of at least part of the raw material supply pipe 35 such that the state of the plasma raw material 1 is changeable into either a solid state or a liquid state. The channel of the raw material supply pipe 35 can be closed by cooling the plasma raw material 1 in the raw material supply pipe 35 to be in the solid state using the temperature control mechanism 50. Conversely, the channel of the raw material supply pipe 35 can be opened by heating the plasma raw material 1 in the raw material supply pipe 35 to be in the liquid state using the temperature control mechanism 50.

In this way, the temperature control mechanism 50 exhibits the fluid control function for the plasma raw material 1.

As the temperature control mechanism 50, for example, a mechanism that combines a heating mechanism and a cooling mechanism and is capable of controlling the temperature rise and fall is used. As the heating mechanism, for example, a heater using a heating wire or the like is used. As the cooling mechanism, for example, a heat dissipation mechanism using air cooling, water cooling, or the like, or a mechanism using a Peltier element or the like is used. Note that the temperature control mechanism 50 may include only a heating mechanism. In this case, temperature control is realized using the effect of natural cooling.

In the present embodiment, the temperature control mechanism 50 corresponds to a first temperature control mechanism. The temperature control mechanism 50 serves as a supply valve mechanism that is provided to a supply pipe and opens and closes the flow of the liquid plasma raw material.

Note that during the cooling operation of the temperature control mechanism 50, the liquid plasma raw material 1 accommodated in the raw material tank 34 is affected in accordance with the position where the temperature control mechanism 50 is provided. For example, part of the plasma raw material 1 in the raw material tank 34 presumably solidifies. In order to avoid such a situation, the temperature control mechanism 50 is favorably disposed at a position as far away as possible from the raw material tank 34.

The raw material supply pipe 35 may be provided with a narrowed portion where the channel is narrowed. As the narrowed portion, a throttle mechanism such as an orifice where the channel (inner diameter of the raw material supply pipe) is partially narrowed is used. In the case where a narrowed portion is provided, the temperature control mechanism 50 is provided in the narrowed portion.

As a result, it is possible to cause the plasma raw material 1 to rapidly solidify or liquefy inside the raw material supply pipe 35 by the cooling/heating operation of the temperature control mechanism 50. As a result, it is possible to reduce the influence on the liquid plasma raw material 1 accommodated in the raw material tank 34. In addition, it is possible to rapidly open and close the channel and control the supply amount of the plasma raw material 1 with high accuracy.

### [Operation of temperature control mechanism 50]

The plasma raw material 1 that is accommodated in the raw material tank 34 and maintained in the liquid state is supplied to the storage portion 24 of the raw material container 21 via the raw material supply pipe 35.

At this time, a temperature control region set in part of the raw material supply pipe 35 is cooled by the temperature control mechanism 50. In this case, the liquid plasma raw material 1 that tries to pass through the temperature control region cooled by the temperature control mechanism 50 solidifies in the temperature control region and closes the inside of the raw material supply pipe 35. In other words, the plasma raw material 1 that has solidified in the temperature control region closes the channel of the raw material supply pipe 35.

Meanwhile, when the temperature control region is heated by the temperature control mechanism 50, the solid plasma raw material 1 that closes the inside of the raw material supply pipe 35 changes to the liquid plasma raw material 1 again. As a result, the channel of the raw material supply pipe 35 is opened, and the liquid plasma raw material 1 is supplied from the end (outlet 35b) of the raw material supply pipe 35 to the storage portion 24 of the raw material container 21.

As described above, by providing the temperature control mechanism 50 in the middle of the raw material supply pipe 35 and cooling or heating part of the raw material supply pipe 35, it is possible to impart a fluid control function similar to that of a valve to the raw material supply pipe 35. With such a configuration, it is possible to omit the mechanical valve mechanism such as the supply valve 36 shown in Fig. 1.

The fluid control by the temperature control mechanism 50 has fewer failures unlike the mechanical valve. This makes the repairment, maintenance, and the like of the apparatus easier.

Note that the plasma raw material 1 (e.g., Sn) that has solidified inside the raw material supply pipe 35 moves in the raw material supply pipe 35 before liquefying completely during the heating operation of the temperature control mechanism 50, and the raw material supply pipe 35 can be clogged with the plasma raw material 1 in some cases. In this case, a method of continuing the heating operation of the temperature control mechanism 50 in order to unclog the raw material supply pipe 35 is conceivable. However, in the case where the clogged part with the plasma raw material 1 is a certain distance from the temperature control mechanism 50, the raw material supply pipe 35 is not necessarily unclogged.

In order to deal with such a problem, the raw material supply pipe 35 may be provided with a vibration mechanism (not shown). By vibrating the raw material supply pipe 35 using this vibration mechanism, it is possible to remove the solid plasma raw material 1 with which the raw material supply pipe 35 is clogged.

Alternatively, the raw material supply pipe 35 may be connected to a gas supply device via a gas supply pipe (not shown). For example, by supplying gas to the inside of the raw material supply pipe 35 when a problem as described above has occurred, it is possible to remove the solid plasma raw material 1 with which the raw material supply pipe 35 is clogged with.

The pressure in the raw material tank 34 may be intentionally slightly higher than the pressure in the vacuum chamber 3. In the case where there is a slight difference in pressure, fluid moves from the high pressure side to the low pressure side, and thus, it is possible to make the plasma raw material 1 flow easily from the side of the raw material tank 34 to the side of the vacuum chamber 3. As a result, it is possible to prevent the raw material supply pipe 35 from being clogged with the plasma raw material 1.

### <Third embodiment>

Fig. 7 is a schematic diagram illustrating a configuration example of a raw material supply device according to a third embodiment. A raw material supply device 330 is provided with a load lock mechanism 55 on the side where the raw material tank 34 is replenished with a raw material in the raw material supply device 230 including the temperature control mechanism 50 described with reference to Fig. 6.

The load lock mechanism 55 includes a first replenishment valve 33a, a second replenishment valve 33b, and a replenishment exhaust pipe 56. In the present embodiment, the first replenishment valve 33a, the second replenishment valve 33b, and the replenishment exhaust pipe 56 constitute a replenishment valve mechanism.

The first replenishment valve 33a and the second replenishment valve 33b are mechanical valves provided to the raw material replenishment pipe 32. The first replenishment valve 33a is disposed on the side of the raw material supply section 31, and the second replenishment valve 33b is disposed on the raw material tank 34.

The replenishment exhaust pipe 56 connects the raw material replenishment pipe 32 (load lock section 57) between the first replenishment valve 33a and the second replenishment valve 33b to a first vacuum exhaust device 45a. As a result, it is possible to exhaust the load lock section.

The configuration shown in Fig. 7 can be said to be, for example, a configuration obtained by providing the first replenishment valve 33a and the replenishment exhaust pipe 56 to the raw material supply device 230 shown in Fig. 6. Note that in Fig. 7, the second replenishment valve 33b corresponds to the replenishment valve 33 shown in Fig. 6. In Fig. 7, a second vacuum exhaust device 45b that exhausts the raw material tank 34 corresponds to the vacuum exhaust device 45 shown in Fig. 6.

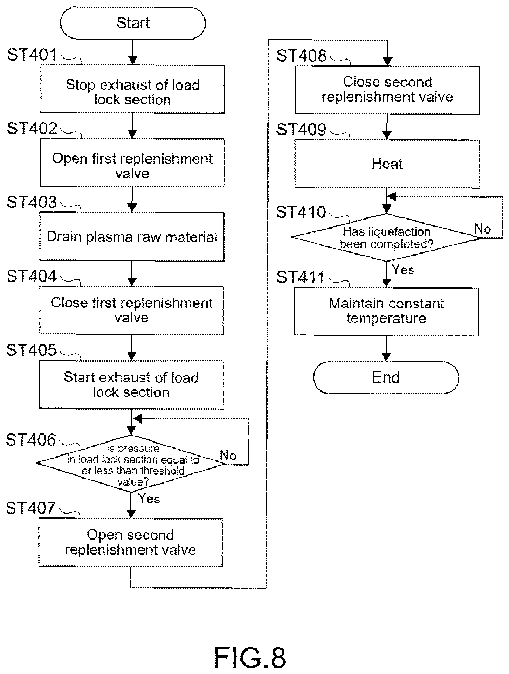

Fig. 8 is a flowchart illustrating an example of the raw material replenishment operation executed by the raw material supply device shown in Fig. 7. The processing shown in Fig. 8 is an operation example of the raw material replenishment operation executed in the raw material supply device 330 including the load lock mechanism 55, and is executed instead of the raw material replenishment operation described with reference to Fig. 4, for example.

Note that in the case where the load lock mechanism 55 is provided, during the steady operation, the first replenishment valve 33a, the second replenishment valve 33b, and the supply valve 36 are in the closed state, and the following operation is executed. The load lock section 57 is exhausted by the first vacuum exhaust device 45a, the raw material tank 34 is exhausted by the second vacuum exhaust device 45b, and the liquid plasma raw material 1 is maintained at a constant temperature by the heating mechanism 40.

First, the exhaust of the load lock section 57 is stopped from the state where the steady operation is being executed (Step 401). For example, the replenishment exhaust pipe 56 is closed. Alternatively, the first vacuum exhaust device 45a being driven is stopped. As a result, the exhaust of the load lock section 57 is stopped.

Next, the first replenishment valve 33a is controlled such that the first replenishment valve 33a is in the opened state (Step 402). At this time, the second replenishment valve 33b and the supply valve 36 maintain the closed state. When the first replenishment valve 33a is opened, the inside of the load lock section 57 is open to the atmosphere.

Next, the raw material supply section 31 is controlled to drain a predetermined amount of the plasma raw material 1 (Step 403). The plasma raw material 1 supplied from the raw material supply section 31 is accommodated in the load lock section 57 once through the raw material replenishment pipe 32 and the first replenishment valve 33a.

Next, the first replenishment valve 33a is controlled such that the first replenishment valve 33a is in the closed state (Step 404). At this time, the second replenishment valve 33b remains closed, and the load lock section 57 has an independent space.

Next, the exhaust of the load lock section 57 is started (Step 405). For example, the replenishment exhaust pipe 56 that has been closed is opened. Alternatively, the operation of the first vacuum exhaust device 45a is started. As a result, the exhaust of the load lock section 57 is started.

Next, whether or not the pressure inside the load lock section 57 has been reduced to a threshold value or less is determined (Step 406). For example, a pressure gauge (not shown) is provided to the load lock section 57, and whether or not the measurement value of the pressure gauge has been reduced to a predetermined threshold value or less is determined. The predetermined threshold value may be set in accordance with, for example, the pressure inside the raw material tank 34 being exhausted. For example, a threshold value similar to the pressure inside the load lock section 57 is set.

In the case where it is determined that the pressure inside the load lock section 57 is larger than the threshold value (No in Step 406), the determination processing of Step 406 is repeatedly executed. During this time, the exhaust operation of the load lock section 57 is continued.

In the case where it is determined that the pressure inside the load lock section 57 is the threshold value or less (Yes in Step 406), the second replenishment valve 33b is controlled such that the second replenishment valve 33b is in the opened state (Step 407). At this time, the first replenishment valve 33a maintains the closed state.

When the second replenishment valve 33b is opened, the solid plasma raw material 1 that has been accommodated in the load lock section 57 is supplied to the raw material tank 34.

In the process from Step 401 to Step 407, the exhaust of the raw material tank 34 is continuously executed and the inside of the raw material tank 34 is maintained in the reduced-pressure atmosphere. As described above, by using the load lock mechanism 55, it is possible to supply the plasma raw material 1 without making the inside of the raw material tank 34 open to the atmosphere.

When the plasma raw material 1 in the load lock section 57 runs out, the second replenishment valve 33b is controlled such that the second replenishment valve 33b is in the closed state (Step 408). As a result, the load lock section 57 and the raw material tank 34 each have an independent space.

After the second replenishment valve 33b is closed, the plasma raw material 1 in the raw material tank 34 is heated (Step 409), whether or not the liquefaction of the plasma raw material 1 has been completed is determined (Step 410), and control of maintaining the plasma raw material 1 at a constant temperature is executed (Step 411) in the case where the liquefaction has been completed. The processing of Steps 409, 410, and 411 is similar to the processing of Steps 206, 207, and 208 shown in Fig. 4, for example.

### [Leakage via raw material supply pipe]

As shown in Fig. 6, In the configuration in which the temperature control mechanism 50 is provided to the raw material supply pipe 35 connecting the raw material tank 34 and the vacuum chamber 3 to each other, the plasma raw material 1 solidifies and liquefies in the temperature control region on the raw material supply pipe 35 by cooling and heating part of the raw material supply pipe 35 by the temperature control mechanism 50.

Since the plasma raw material 1 passing through the raw material supply pipe 35 is molten metal such as tin, the volume thereof decreases when being cooled and solidifying. For this reason, in the case where the plasma raw material 1 solidifies inside the raw material supply pipe 35, a gap is generated between the inner wall of the raw material supply pipe 35 and the solidified plasma raw material 1 due to the decrease in volume of the plasma raw material 1 in some cases.

For this reason, even if an attempt is made to make the state of the raw material supply pipe 35 the closed state where the channel is closed by solidifying the plasma raw material 1 inside the raw material supply pipe 35 by the temperature control mechanism 50, the reduced-pressure atmosphere inside the vacuum chamber 3 is not necessarily maintained depending on the inner diameter of the raw material supply pipe 35.

Assumption is made that the load lock mechanism 55 is not provided and the raw material tank 34 is open to the atmosphere and replenished with the plasma raw material 1. In this case, when supplying the plasma raw material 1 from the raw material supply section 31 to the raw material tank 34, the valve provided to the raw material replenishment pipe 32 is made in the opened state to make the raw material tank 34 open to the atmosphere. At this time, the solid plasma raw material 1 cooled by the temperature control mechanism 50 acts as a stopper between the raw material tank 34 and the vacuum chamber 3 (in the raw material supply pipe 35), and the raw material supply pipe 35 is closed. As a result, the internal atmosphere from the raw material supply section 31 to the raw material tank 34 becomes an atmospheric pressure, and the inside of the vacuum chamber 3 is maintained in the reduced-pressure atmosphere.

When there is a gap between the inner wall of the raw material supply pipe 35 and the solidified plasma raw material 1, the closed state with the solid plasma raw material 1 is insufficient. In this case, there is a possibility that air is entrained from the raw material tank 34 in the atmospheric pressure into the vacuum chamber 3 through the gap described above and deteriorates the reduced-pressure atmosphere in the vacuum chamber 3.

In the case where the raw material tank 34 is open to the atmosphere, since the differential pressure with the vacuum chamber 3 is too large, there is a possibility that the plasma raw material 1 left inside the raw material tank 34 or the raw material supply pipe 35 is pushed by the atmospheric pressure and flows into the vacuum chamber 3. In this case, there is a possibility that the plasma raw material 1 is supplied at an unexpected timing and the inside of the vacuum chamber 3 is contaminated with the plasma raw material 1. Therefore, it is favorable that the raw material tank 34 is constantly in the reduced-pressure atmosphere.

In the present embodiment, as shown in Fig. 7, the load lock mechanism 55 is provided in the replenishment route (on the atmosphere side) for replenishing the raw material tank 34 with the plasma raw material 1. As a result, it is possible to introduce the plasma raw material 1 into the raw material tank 34 without making the raw material tank 34 open to the atmosphere. In other words, it is possible to make the raw material tank 34 constantly in a reduced-pressure atmosphere.

For this reason, even if a gap is generated between the plasma raw material 1 that has solidified by being cooled by the temperature control mechanism 50 and the inner wall of the raw material supply pipe 35, the raw material tank 34 is constantly in a reduced-pressure atmosphere and air or the like does not flow into the vacuum chamber 3 through the gap. As a result, it is possible to reliably maintain the reduced-pressure atmosphere inside the vacuum chamber 3 and realize the stable operation of the light source apparatus 100.

### <Fourth embodiment>

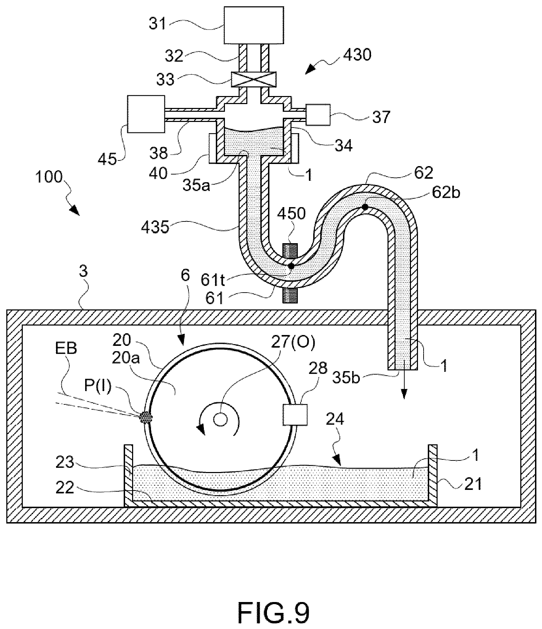

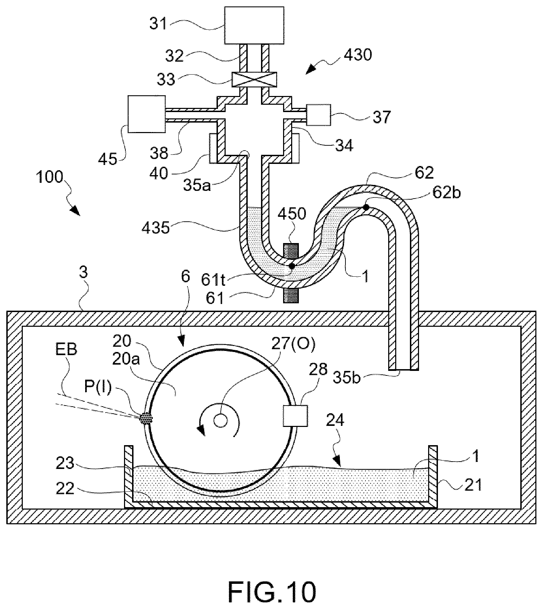

Fig. 9 is a schematic diagram illustrating a configuration example of a raw material supply device according to a fourth embodiment. Fig. 10 is a schematic diagram illustrating an operation example of the raw material supply device shown in Fig. 9.

As shown in Fig. 9, in a raw material supply device 430, a raw material supply pipe 435 bent into a U shape is used in the raw material supply device 230 described with reference to Fig. 6 instead of the raw material supply pipe 35 having a straight shape (straight pipe shape). The raw material supply pipe 435 is provided with a temperature control mechanism 450.

The raw material supply pipe 435 includes a first bent portion 61 and a second bent portion 62, each of which is a bent pipe. The first bent portion 61 is connected to the side of the raw material tank 34 and bends the channel of the liquid plasma raw material 1 from downward to upward. The second bent portion 62 is connected to the side of the vacuum chamber 3 and bends the channel of the plasma raw material from upward to downward. Therefore, the raw material supply pipe 435 extending downward (in the direction of gravity) from the raw material tank 34 folds back in the first bent portion 61, faces upward, extends downward again in the subsequent second bent portion 62, and penetrates the vacuum chamber 3.

A lower surface 62b of the channel formed in the second bent portion 62 is disposed at a position higher than the position of an upper surface 61t of the channel formed in the first bent portion 61.

Fig. 9 schematically illustrates the lower surface 62b of the channel in the second bent portion 62 and the upper surface 61t of the channel in the first bent portion 61 by black circles. The first bent portion 61 and the second bent portion 62 are each configured as a U-shaped pipe. Therefore, as shown in Fig. 9, the raw material supply pipe 435 has a shape obtained by connecting two U-shaped pipes. Note that instead of the U-shaped pipe, a V-shaped pipe, a pipe bent at right angle, or the like may be used.

The temperature control mechanism 450 is provided to the first bent portion 61 and adjusts the temperature of the first bent portion 61 such that the state of the plasma raw material 1 is changeable into either a solid state or a liquid state.

The temperature control mechanism 450 is configured similarly to the temperature control mechanism 50 shown in Fig. 6, for example. For example, the temperature control mechanism 450 is configured to combine a heating mechanism and a cooling mechanism and is capable of controlling the temperature rise and fall. Note that in the case where the plasma raw material 1 can be made in a solid state using the effect of natural cooling, the temperature control mechanism 50 may include only a heating mechanism. In the present embodiment, the temperature control mechanism 450 corresponds to a second temperature control mechanism.

The temperature control mechanism 450 heats, in the case where the plasma raw material 1 is caused to pass therethrough, the first bent portion 61 to make the plasma raw material 1 in the liquid state. Conversely, the temperature control mechanism 450 cools, in the case where the plasma raw material 1 is not caused to pass therethrough, the first bent portion 61 to make the plasma raw material 1 in the solid state.

For example, making the plasma raw material 1 in the solid state forms a stopper in the first bent portion 61. As a result, even if the raw material tank 34 is open to the atmosphere, it is possible to avoid a situation in which the plasma raw material 1 is pushed by the atmospheric pressure and pushed to the side of the vacuum chamber 3.

Fig. 9 illustrates the state where the raw material supply device 430 supplies the liquid plasma raw material 1 from the raw material tank 34 to the vacuum chamber 3 (raw material container 21). Fig. 10 illustrates the state where the supply of the liquid plasma raw material 1 is stopped.

As shown in Fig. 9, for example, the fluid that has entered the first bent portion 61 from the side of the raw material tank 34 is stored in the first bent portion 61. When the liquid surface of the fluid stored in the first bent portion 61 exceeds the lower surface 62b of the channel of the second bent portion 62, the fluid passes through the second bent portion 62 and flows into the side of the vacuum chamber 3.

As described above, the raw material supply pipe 435 is configured such that the upper surface 61t of the channel of the first bent portion 61 is lower than the lower surface 62b of the channel of the second bent portion 62. As a result, when fluid passes through the second bent portion 62, the channel of the first bent portion 61 is completely filled with the fluid. As a result, since there is no path for gases such as air to pass through, it is possible to maintain the reduced-pressure atmosphere on the side of the vacuum chamber 3.

Regardless of the liquid surface level of the liquid plasma raw material 1 accommodated in the raw material supply pipe 435, the plasma raw material 1 remains in the first bent portion 61 of the raw material supply pipe 435 to block the channel. For example, although all the liquid plasma raw material 1 that has been accommodated in the raw material tank 34 is supplied to the raw material container 21 in Fig. 10, the plasma raw material 1 remains in the first bent portion 61 in such a state.

Since the liquid plasma raw material 1 is made of a metal material such as tin, the liquid plasma raw material 1 remained in the raw material supply pipe 435 acts as a stopper in the closed state, making it possible to maintain the reduced-pressure atmosphere of the vacuum chamber 3.

As described above, in the raw material supply device 430, unlike the case of using a raw material supply pipe having a straight shape, the raw material supply pipe 435 is automatically made in the closed state when the plasma raw material 1 no longer passes through the second bent portion 62 without changing the plasma raw material 1 in the raw material supply pipe 435 to a solid state. For this reason, a cooling mechanism or the like does not necessarily need to be provided to the raw material supply pipe 435.

In the raw material supply device 430, when the liquid surface level of the liquid plasma raw material 1 exceeds the height of the lower surface 62b of the channel of the second bent portion 62, the liquid plasma raw material 1 is supplied to the raw material container 21. Here, the state where the liquid surface level is similar to the height of the lower surface 62b of the channel of the second bent portion 62 as shown in Fig. 10 is referred to as the initial state. For example, in the case where the raw material tank 34 is replenished with the plasma raw material 1 in the initial state, the amount of the plasma raw material 1 to be supplied to the raw material container 21 is the same as the replenishment amount to the raw material tank 34. As a result, it is possible to control the amount of the plasma raw material 1 to be supplied to the raw material container 21 without detecting the liquid surface level or the like, and simplify the apparatus configuration.

Note that the temperature control mechanism 450 is provided in the bottom portion of the first bent portion 61. As a result, in the case where the liquid plasma raw material 1 remained in the bottom portion of the first bent portion 61 has solidified, it is possible to liquefy the plasma raw material 1 again by the temperature control (heating) by the temperature control mechanism 450. As a result, the raw material supply pipe 435 that has been in the closed state can be made in the opened state again.

The raw material supply pipe 435 is capable of controlling the flow of the liquid plasma raw material 1 alone with the structure described above. For example, in the case where the plasma raw material remained in the first bent portion 61 can be liquefied by the heat from the heating mechanism 40 of the raw material tank 34, the temperature control mechanism 450 or the like does not necessarily need to be provided.

In the present embodiment, a supply controller in which the raw material supply pipe 435 controls the supply of the liquid plasma raw material through the supply pipe alone or by a combination of the raw material supply pipe 435 and the temperature control mechanism 450 is realized. As described above, by using the raw material supply pipe 435 in which two bent portions are connected to each other, it is possible to easily maintain the reduced-pressure atmosphere in the vacuum chamber 3.

### <Fifth embodiment>

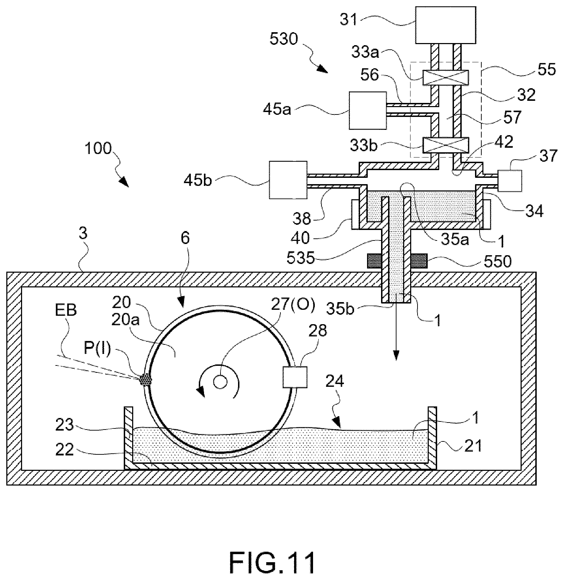

Fig. 11 is a schematic diagram illustrating a configuration example of a raw material supply device according to a fifth embodiment. A raw material supply device 530 is provided with a raw material supply pipe 535 at a different position instead of the raw material supply pipe 35 where the inlet 35a is provided at the bottom of the raw material tank 34 in the raw material supply device 330 shown in Fig. 7. The raw material supply pipe 535 is provided with a temperature control mechanism 550.

The raw material supply pipe 535 is disposed such that the inlet 35a is located at a position higher than the inside bottom of the raw material tank 34. In the example shown in Fig. 11, the raw material supply pipe 535 is a pipe having a straight shape. The raw material supply pipe 535 is disposed to penetrate the bottom such that the inlet 35a protrudes upward from the bottom of the raw material tank 34. Since the inlet 35a is located at a position higher than the bottom of the raw material tank 34, the liquid plasma raw material 1 is constantly stored in a region inside the raw material tank 34 lower than the inlet 35a.

The raw material tank 34 includes a replenishment port 42 to be replenished with the plasma raw material 1 via the raw material replenishment pipe 32. The inlet 35a of the raw material supply pipe 535 is disposed at a position that does not overlap vertically with the replenishment port 42. As a result, it is possible to avoid a situation in which the plasma raw material 1 for replenishment come out from the raw material replenishment pipe 32 directly enters the raw material supply pipe 535.

In the raw material supply device 530, in the case where the liquid surface level of the liquid plasma raw material 1 has exceeded the height of the inlet 35a, the liquid plasma raw material 1 flows into the raw material supply pipe 535. The liquid plasma raw material 1 flown into the raw material supply pipe 535 passes through the inside of the raw material supply pipe 535 and is supplied from the outlet 35b to the storage portion 24 of the raw material container 21 inside the vacuum chamber 3.

Meanwhile, when the liquid surface level of the liquid plasma raw material 1 is the same as the height of the inlet 35a, the liquid plasma raw material 1 does not flow into the raw material supply pipe 535 and the raw material supply to the raw material container 21 is stopped.

Note that by causing the temperature control mechanism 550 to operate to partially cool the raw material supply pipe 535, the raw material supply to the raw material container 21 can be stopped even in the case where the liquid surface level of the liquid plasma raw material 1 exceeds the height of the inlet 35a.

For example, in the raw material supply device 530, the raw material tank 34 is replenished with a new plasma raw material 1 while the liquid surface level of the liquid plasma raw material 1 is the same as the height of the inlet 35a. In this case, the liquid surface level increases by the amount corresponding to the volume of the supplied plasma raw material 1. At this time, the plasma raw material 1 in the amount corresponding to the increased liquid surface level flows into the raw material supply pipe 535 and is supplied to the raw material container 21.

In other words, in the raw material supply device 530, the replenishment amount of the raw material tank 34 with the plasma raw material 1 is the supply amount of the plasma raw material 1 to the raw material container 21 as it is. It can be said that this configuration is similar to that of the raw material supply device 430 described with reference to Fig. 9 and Fig. 10 in the sense that the supply amount is limited by the liquid surface. With such a configuration, it is possible to control the amount of the plasma raw material 1 to be supplied to the raw material container 21 without detecting the liquid surface level or the like and simplify the apparatus configuration.

Note that in the raw material supply device 530, for example, in the case where the plasma raw material 1 in the raw material supply pipe 535 does not act as a stopper that closes the channel (e.g., in the case where the plasma raw material 1 does not remain in the raw material supply pipe 535), a path through which gasses pass is presumably formed in the raw material supply pipe 535.

Meanwhile, the raw material supply device 530 includes the load lock mechanism 55 for replenishing the raw material tank 34 with the plasma raw material 1, the raw material tank 34 is not open to the atmosphere. The raw material tank 34 is exhausted by the second vacuum exhaust device 45b and maintained in a reduced-pressure atmosphere. Therefore, even if a path through which gasses pass is formed in the raw material supply pipe 535 as described above, by reducing the pressure inside the raw material tank 34 to be similar to the pressure inside the vacuum chamber 3, it is possible to sufficiently prevent the reduced-pressure atmosphere of the vacuum chamber 3 from being deteriorated.

Although the raw material supply pipe 535 having a straight shape has been described in Fig. 11, the present technology is not limited thereto. For example, the raw material supply pipe 535 having an L shape may be used. In this case, the raw material supply pipe 535 is disposed such that the inlet 35a is provided on the side surface inside the raw material tank 34 and the outlet 35b faces downward. Note that the inlet 35a is located at a position higher than the bottom. Even with such a configuration, it is possible to limit the amount of the liquid plasma raw material 1 to be supplied to the raw material container 21 by the liquid surface level and simplify the apparatus configuration.

### <Sixth embodiment>

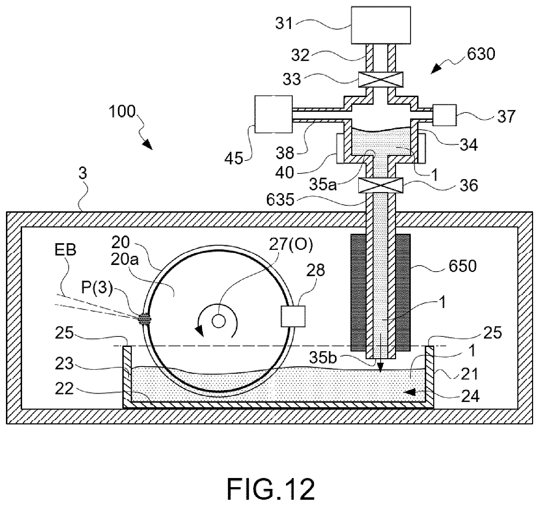

Fig. 12 is a schematic diagram illustrating a configuration example of a raw material supply device according to a sixth embodiment. A raw material supply device 630 includes a raw material supply pipe 635 configured such that the outlet 35b is closer to the raw material container 21 as compared with that of the raw material supply pipe 35 provided to the raw material supply device 30 described with reference to Fig. 2. In addition, the raw material supply pipe 635 is provided with a temperature control mechanism 650. Other configurations are similar to those of the raw material supply device 30 shown in Fig. 2.

The raw material supply pipe 635 is disposed such that the outlet 35b is located at a position lower than an opening end 25 of the storage portion 24 of the raw material container 21. In the example shown in Fig. 12, the opening end 25 of the storage portion 24 is an upper end portion of the outer wall portion 23 forming the storage portion 24. The height position of the opening end 25 is illustrated by a dot-dash line. The outlet 35b of the raw material supply pipe 635 is disposed at a position lower than the height of the opening end 25 (height of the outer wall portion 23 with respect to the upper surface of the bottom portion 22). In other words, the outlet 35b is disposed to enter the space (storage portion 24) surrounded by the outer wall portion 23.

The temperature control mechanism 650 is provided in a portion of the raw material supply pipe 635 protruding toward the inside of the vacuum chamber 3, and adjusts the temperature of the portion of the raw material supply pipe 635 protruding toward the inside of the vacuum chamber 3 such that the plasma raw material 1 is in one of a solid state and a liquid state.

As shown in Fig. 12, the temperature control mechanism 650 is provided to cover the entire portion of the raw material supply pipe 635 protruding toward the inside of the vacuum chamber 3. In the present embodiment, the temperature control mechanism 650 corresponds to a third temperature control mechanism.

The present inventors have found that when the liquid plasma raw material 1 is supplied to the vacuum chamber 3, the liquid plasma raw material 1 does not fall in a straight line as liquid droplets but fall while scattering inside the vacuum chamber 3 depending on the conditions such as the pressure in the vacuum chamber 3. In this case, the plasma raw material 1 presumably reaches an unexpected portion in the vacuum chamber 3 (e.g., inner wall of the vacuum chamber 3) and adheres thereto as it is.

In order to suppress such a problem, it is favorable that the end protruding toward the inside of the vacuum chamber 3 of the raw material supply pipe 635 penetrating the outer wall of the vacuum chamber 3 (i.e., the outlet of the raw material supply pipe 635) is made closer to the raw material supply region (upper surface of the bottom portion 22 of the raw material container 21) as much as possible. For example, the outlet 35b of the raw material supply pipe 635 is disposed at a position lower than the opening end 25 of the raw material container 21 (position closer to the upper surface of the bottom portion 22 than the upper surface level of the outer wall portion 23).

As a result, even if at least part of the liquid plasma raw material 1 flown out of the outlet 35b scatters, the rate at which the plasma raw material 1 reaches the liquid surface of the raw material container 21 increases, and it is possible to prevent the plasma raw material 1 from diffusing in the entire vacuum chamber 3. This suppresses the contamination of the apparatus due to the plasma raw material 1.

In the present embodiment, the length of the raw material supply pipe 635 (length of the portion protruding toward the inside of the vacuum chamber 3) is longer than that in the raw material supply device described above.

For this reason, at least part of the liquid plasma raw material 1 liquefied by the heating mechanism 40 provided to the raw material tank 34 is cooled when passing through the raw material supply pipe 635 and can solidify in the raw material supply pipe 635.

When there is such a concern, the temperature control mechanism 650 may be provided to the portion of the raw material supply pipe 635 protruding toward the inside of the vacuum chamber 3, as shown in Fig. 12. By heating the portion of the raw material supply pipe 635 protruding toward the inside of the vacuum chamber 3 using the temperature control mechanism 650, it is possible to prevent the plasma raw material 1 from solidifying in the raw material supply pipe 635.

Note that in the example shown in Fig. 12, the channel of the raw material supply pipe 635 is opened and closed by the mechanical supply valve 36. The temperature control mechanism 650 may be used to open and close the channel, but is mainly used as a heating mechanism for preventing the plasma raw material 1 from solidifying. In this case, the temperature control mechanism 650 does not need to have a cooling function.

The temperature control mechanism 650 may be provided to penetrate the outer wall of the vacuum chamber 3. For example, the temperature control mechanism 650 is provided to cover the entire raw material supply pipe 635 including not only the portion of the raw material supply pipe 635 protruding toward the inside of the vacuum chamber 3 but also the portion disposed outside the vacuum chamber 3. Note that the penetration portion of the raw material supply pipe 635 and the temperature control mechanism 650 penetrating the vacuum chamber 3 is appropriately sealed such that the reduced-pressure atmosphere in the vacuum chamber 3 is not broken.

As a result, it is possible to adjust the temperature of the nearly entire raw material supply pipe 635 using the temperature control mechanism 650. As a result, it is possible to sufficiently avoid a situation in which the raw material supply pipe 635 is clogged with the plasma raw material 1.

The temperature control mechanism 650 has a cooling function. As a result, it is possible to solidify the liquid plasma raw material 1 in the raw material supply pipe 635 and open and close the channel of the raw material supply pipe 635. For this reason, it is unnecessary to provide a mechanical valve such as the supply valve 36 shown in Fig. 12. As a result, it is possible to easily perform the maintenance and suppress contamination in the apparatus due to the plasma raw material 1.

### <Seventh embodiment>

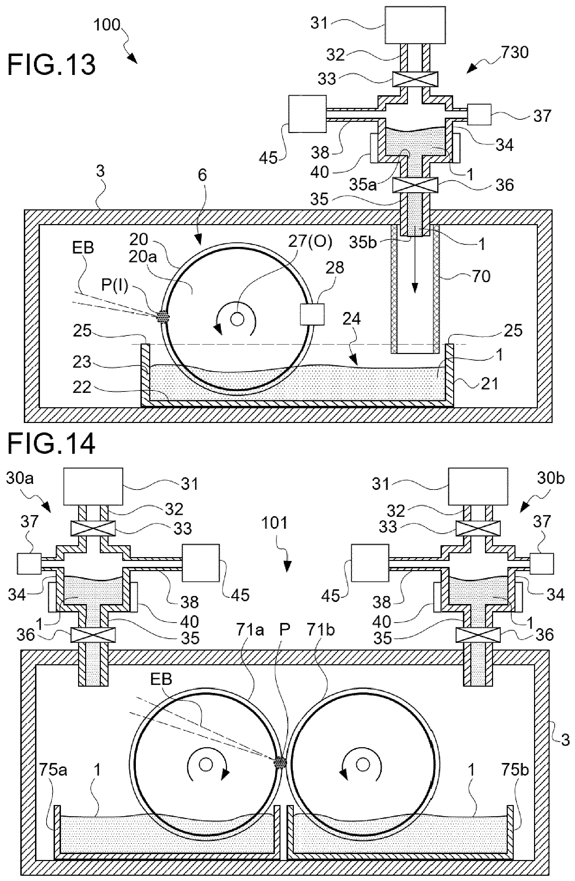

Fig. 13 is a schematic diagram illustrating a configuration example of a raw material supply device according to a seventh embodiment. A raw material supply device 730 is newly provided with a defense pipe 70 in the raw material supply device 30 described with reference to Fig. 2. Note that this configuration in which the defense pipe 70 is provided can be applied to other configurations such as the raw material supply device 230 shown in Fig. 6.

The defense pipe 70 is a hollow member provided in the vacuum chamber 3, is provided to surround the outlet 35b of the raw material supply pipe 35, and is configured to extends to a position lower than the opening end 25 of the storage portion 24 of the raw material container 21. The inner diameter of the defense pipe 70 is set to be larger than the inner diameter of the raw material supply pipe 35.

The defense pipe 70 serves as a defensive wall for suppressing the plasma raw material 1 that has flown out of the raw material supply pipe 35 and scatters in the vacuum chamber 3.

In the present embodiment, the defense pipe 70 is disposed to extend from the inner wall of the vacuum chamber 3 to the inside thereof. The length of the defense pipe 70 is set to be longer than the length (protruding length) of the portion of the raw material supply pipe 35 protruding toward the inside of the vacuum chamber 3. The end of the defense pipe 70 is disposed at a position lower than the opening end 25 of the raw material container 21 (position closer to the upper surface of the bottom portion 22 than the upper surface level of the outer wall portion 23).

In the raw material supply device 730, of the plasma raw material 1 flown out of the outlet 35b of the raw material supply pipe 35, the scattered one is prevented from diffusing into the vacuum chamber 3 by the defense pipe 70. The plasma raw material 1 is flown out of the end of the defense pipe 70 to the outside (inside of the vacuum chamber 3).

The end of the defense pipe 70 is disposed at a position closer to the upper surface of the bottom portion 22 of the raw material container 21 to which the liquid plasma raw material 1 is supplied. As a result, the rate at which the plasma raw material 1 reaches the liquid surface of the raw material container 21 increases, and it is possible to prevent the plasma raw material 1 diffusing in the entire the vacuum chamber 3.

The defense pipe 70 has a large inner diameter enough to surround the outlet 35b. For this reason, substantially no liquid plasma raw material 1 flown out of the outlet 35b adheres to the defense pipe 70 and a situation in which the defense pipe 70 is clogged with the solidified plasma raw material 1 is unlikely to occur. Therefore, unlike the configuration described with reference to Fig. 12, a temperature control mechanism does not necessarily need to be provided. As a result, it is possible to simplify the apparatus configuration and suppress the contamination in the apparatus due to the plasma raw material 1.

### <Other embodiments>

The present invention is not limited to the embodiments described above, and various other embodiments can be realized.

In the above embodiments, the so-called LPP-based light source apparatus 100 in which the plasma raw material 1 is transformed into plasma by the energy beam EB has been described. The present technology is not limited thereto, and the present technology is applicable to a light source apparatus using another method.

Fig. 14 is a schematic diagram illustrating a configuration example of a light source apparatus according to another embodiment. A light source apparatus 101 shown in Fig. 14 is a so-called LDP-based light source apparatus in which the plasma raw material 1 vaporized with the energy beam EB is transformed into plasma by the discharge. Although the raw material supply device 30 shown in Fig. 2 is used in this example, the present technology is not limited thereto. For example, another raw material supply device described in the above embodiments may be used.

As shown in Fig. 14, the light source apparatus 101 includes a pair of rotating electrodes 71a and 71b, a pair of raw material containers 75a and 75b provided corresponding to the rotating electrodes 71, and the vacuum chamber 3 accommodating them.

The rotating electrodes 71a and 71b are each a disk-shaped electrode, connected to a shaft of a motor (not shown), and rotatably supported thereby. The rotating electrodes 71a and 71b are disposed such that their outer edges are in close proximity to each other with a predetermined interval, and a high voltage is applied between the electrodes. Of the outer edge of the rotating electrode 71a, the portion in close proximity to the rotating electrode 71b is irradiated with the energy beam EB.

In the present embodiment, the rotating electrodes 71a and 71b correspond to a rotation body.

The raw material containers 75a and 75b are each a storage container for storing the liquid plasma raw material 1.

The raw material container 75a is provided such that the rotating electrode 71a is immersed therein, and supplies the liquid plasma raw material 1 to the rotating electrode 71a. The raw material container 75b is provided such that the rotating electrode 71b is immersed therein, and supplies the liquid plasma raw material 1 to the rotating electrode 71b. The raw material containers 75a and 75b are insulated from each other.

For example, when the rotating electrode 71a (rotating electrode 71b) rotates, the liquid plasma raw material 1 stored in the raw material container 75a (raw material container 75b) adheres to the front surface of the rotating electrode 71a (rotating electrode 71b). As a result, the liquid plasma raw material 1 is distributed in a film shape in the portion of the rotating electrode 71a (rotating electrode 71b) immersed in the liquid plasma raw material 1.

With such a configuration, the liquid plasma raw material 1 is supplied to the portion where the rotating electrode 71a and the rotating electrode 71b are in close proximity to each other. At this time, the plasma raw material 1 vaporizes with the energy beam EB applied to the rotating electrode 71a. Since a high voltage is applied between the rotating electrode 71a and the rotating electrode 71b, the plasma raw material 1 vaporized with the energy beam EB is excited to generate the plasma P in the portion where the electrodes are in close proximity to each other. The radiation R is extracted from this plasma P.

As shown in Fig. 14, the light source apparatus 101 is provided with a raw material supply device 30a and a raw material supply device 30b that respectively supply the liquid plasma raw material 1 to the raw material container 75a and the raw material container 75b. The raw material supply device 30a (raw material supply device 30b) supplies the supply plasma raw material 1 in the liquid state from above the portion where the liquid plasma raw material 1 stored in the raw material container 75a (raw material container 75b) is exposed.

For example, in the configuration in which the solid plasma raw material 1 is supplied to the raw material container 75a and the raw material container 75b, the temperature of the plasma raw material 1 in each container presumably decreases. In this case, there is a possibility that the temperature, thickness, viscosity, and the like of the plasma raw material 1 to be supplied to the region where the plasma P is generated change and the luminous intensity and the like of the radiation R change.

On the other hand, in the present embodiment, the liquid plasma raw material 1 is directly supplied to the raw material containers 75a and 75b by the raw material supply device 30a and 30b, respectively. For this reason, the temperature change of the plasma raw material 1 is suppressed, and it is possible to realize a stable light emission operation.

In the above embodiments, the configuration in which the liquid plasma raw material 1 is supplied to the raw material container provided inside the vacuum chamber 3 has been described. The present technology is not limited thereto, and the raw material supply device according to the present technology is capable of supplying the liquid plasma raw material 1 from the outside of the vacuum chamber 3 to an arbitrary container for storing the liquid plasma raw material 1 inside the vacuum chamber 3.

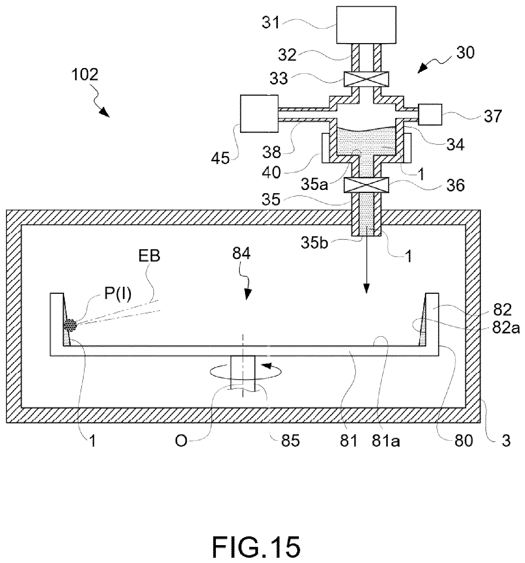

Fig. 15 is a schematic diagram illustrating a configuration example of a light source apparatus according to another embodiment. A light source apparatus 102 shown in Fig. 15 is provided with a rotating drum 80 that is provided in the vacuum chamber 3 and rotates while storing the liquid plasma raw material 1. The light source apparatus 102 is an LPP-based apparatus that causes the plasma raw material 1 stored in the rotating drum 80 to be transformed into plasma by the energy beam EB. The rotating drum 80 shown in Fig. 15 corresponds to a storage container.

The rotating drum 80 includes a storage portion 84 that opens upward and stores the liquid plasma raw material 1. The liquid plasma raw material 1 is supplied to the storage portion 84 from the raw material supply device 30.

The rotating drum 80 is provided with a heating mechanism (not shown) for maintaining the plasma raw material 1 to be supplied to the storage portion 84 in the liquid state. As the heating mechanism, a heater that directly heats the rotating drum 80 using a heating wire or the like is used. Alternatively, a heater or the like that heats the rotating drum 80 from the outside using radiation or the like may be used.

In the example shown in Fig. 15, the rotating drum 80 includes a disk-shaped base 81 and an annular outer wall portion 82 formed on one surface of the base 81 along the peripheral edge of the base 81. In the rotating drum 80, the region surrounded by the base 81 and the outer wall portion 82 is the storage portion 84 for storing the liquid plasma raw material 1. An inner circumferential face 82a of the outer wall portion 82 facing the rotation axis O forms a side surface surrounding the storage portion 84 and serves as the inner surface of the storage portion 84. The rotating drum 80 is disposed such that the storage portion 84 faces upward.

A shaft member 85 that rotates around the predetermined rotation axis O is connected to the face of the rotating drum 80 opposite to the face on which the storage portion 84 is formed such that the central axis of the rotating drum 80 matches the rotation axis O. As a result, the rotating drum 80 is supported rotatably around the rotation axis O. The shaft member 85 is driven to rotate by a motor, which is not shown in the figure.

The rotation axis O of the rotating drum 80 is typically set to substantially match the vertical direction. Note that the rotation axis O may be set at an oblique angle to the vertical direction within the range in which a light emission operation with the plasma P is possible.

When the rotating drum 80 is caused to continuously rotate around the rotation axis O, the liquid plasma raw material 1 supplied to the storage portion 84 moves to the side of the inner circumferential face 82a of the outer wall portion 82 by centrifugal force and is distributed along the inner circumferential face 82a. The thickness of the liquid plasma raw material 1 distributed on the inner circumferential face 82a is adjusted in accordance with the rotation speed of the rotation body.

As described above, the rotating drum 80 stores the liquid plasma raw material 1 on the inner circumferential face 82a that is the inner surface of the storage portion 84. The energy beam EB that excites the liquid plasma raw material 1 to generate the plasma P is applied to the inner surface of the storage portion 84 (the inner circumferential face 82a). As a result, it is possible to continuously supply the plasma raw material 1 distributed with an appropriate thickness to the irradiation position I of the energy beam EB.

As shown in Fig. 15, the light source apparatus 102 is provided with the raw material supply device 30 that supplies the liquid plasma raw material 1 to the rotating drum 80. The raw material supply device 30 supplies the supply plasma raw material 1 in the liquid state from above the storage portion 84 of the rotating drum 80. Note that although the raw material supply device 30 shown in Fig. 2 is used in Fig. 15, another raw material supply device may be used.

The liquid plasma raw material 1 supplied to the storage portion 84 of the rotating drum 80 moves to the side of the outer wall portion 82 along a base front surface 81a by centrifugal force and is finally distributed along the inner circumferential face 82a of the outer wall portion 82. Since the plasma raw material 1 is already in the liquid state at the time point of supply, it flows smoothly until the distribution along the inner circumferential face 82a. As compared with the case of supplying the plasma raw material 1 in a solid state, it is unnecessary to perform liquefaction and it is possible to sufficiently reduce the change in temperature of the plasma raw material 1 on the rotating drum 80. As a result, it is possible to stably supply the plasma raw material 1 without hindering the light emission operation of the radiation R.

In the above embodiments, the configuration in which the raw material tank 34 of the raw material supply device is disposed above the vacuum chamber 3 and the liquid plasma raw material 1 is supplied to the storage container (raw material container 21, 75a, or 75b, or the rotating drum 80) using the gravity has been mainly described. The present technology is not limited thereto, and the raw material tank 34 may be disposed on the side or below the vacuum chamber 3.

In this case, for example, a transport pump that transports the liquid plasma raw material 1 through a raw material supply pipe is used. As the transport pump, for example, an electromagnetic pump capable of transporting the liquid metal (plasma raw material 1) by magnetic force is used. It goes without saying that another type of pump may be used. By using a transport pump, for example, it is possible to freely dispose the raw material tank 34, increasing the degree of freedom in design.

Note that by disposing the raw material tank 34 at a position higher than the storage container even if it is disposed on the side of the vacuum chamber 3, it is also possible to supply the liquid plasma raw material 1 using the gravity.

In any configuration, the end portion (outlet) of the raw material supply pipe on the raw material supply side is disposed above the bottom of the storage container. As a result, it is possible to supply the liquid plasma raw material 1 flown out of the raw material supply pipe to the storage container.

The raw material tank 34 may be disposed inside the vacuum chamber 3. In this case, instead of the raw material supply pipe, a raw material replenishment pipe that replenishes the raw material tank 34 with the plasma raw material 1 is provided to penetrate the vacuum chamber 3. Therefore, the raw material tank 34 disposed inside the vacuum chamber 3 is replenished with the solid or liquid plasma raw material 1 from the outside of the vacuum chamber 3 via the raw material replenishment pipe.

Even with such a configuration, since the plasma raw material 1 is held in the liquid state in the raw material tank 34, it is possible to stably supply the liquid plasma raw material 1 to the storage container. In addition, since the raw material tank 34 accommodates the vacuum chamber 3 therein, it is possible to realize a compact light source apparatus, for example.

Among the characteristic portions according to the present technology described above, it is also possible to combine at least two of the characteristic portions. In other words, the various characteristic portions described in each embodiment may be optionally combined without being restricted to the embodiments. The various effects described above are merely examples and are not limitative; other effects may also be achieved.

### Reference Signs List

- EB: energy beam
- P: plasma
- R: radiation
- I: irradiation position
- 1: plasma raw material
- 3: vacuum chamber
- 21, 75a, 75b: raw material container
- 24, 84: storage portion
- 30, 30a, 30b, 230, 330, 430, 530, 630, 730: raw material supply device
- 31: raw material supply section
- 32: raw material replenishment pipe
- 33: replenishment valve
- 34: raw material tank
- 35, 435, 535, 635: raw material supply pipe
- 36: supply valve
- 50, 450, 550, 650: temperature control mechanism
- 55: load lock mechanism
- 61: first bent portion
- 62: second bent portion
- 70: defense pipe
- 80: rotating drum
- 100, 101, 102: light source apparatus

## Claims

1. A raw material supply device (30, 30a, 30b, 230, 330, 430, 530, 630, 730) that supplies, to an inside of a reduced-pressure chamber (3), a plasma raw material (1) that is transformed into plasma (P) to generate radiation when irradiated with an energy beam (EB), comprising:
a raw material tank (34) that holds the plasma raw material (1) in a liquid state; and
a supply controller that includes a supply pipe (35, 435, 535, 635) that connects the raw material tank (34) and the reduced-pressure chamber (3) to each other and supplies the liquid plasma raw material (1) held inside the raw material tank (34) to a storage container (21, 75a, 75b, 80) provided inside the reduced-pressure chamber (3), and controls supply of the liquid plasma raw material (1) through the supply pipe (35, 435, 535, 635), wherein the supply controller includes a supply valve mechanism (36, 50, 450, 550, 650) that is provided to the supply pipe (35, 435, 535, 635), the supply valve mechanism (36, 50, 450, 550, 650) configured to open and close the flow of the liquid plasma raw material (1) and control the supply of the liquid plasma raw material (1) from the raw material tank (34) to the storage container (21, 75a, 75b, 80) through the raw material supply pipe (35, 435, 535, 635),
**characterized in** further comprising
an exhaust pipe (38) that connects the raw material tank (34) and a predetermined exhaust mechanism (45) to each other,
a raw material replenishment section (31) that replenishes the raw material tank (34) with the plasma raw material (1),
the raw material replenishment section (31) including
a supply section that supplies the plasma raw material (1) for replenishing the raw material tank (34),
a replenishment pipe (32) that connects the supply section and the raw material tank (34) to each other and causes the plasma raw material (1) supplied from the supply section to pass therethrough, and
a replenishment valve mechanism (33) that is provided to the replenishment pipe (32) and is configured to be controlled such that, when the replenishing valve mechanism (33) is in an opened state and the supply pipe (35, 435, 535, 635) is in a closed state, plasma raw material (1) can be supplied to the raw material tank (34) through the raw material replenishment pipe (32), and such that, when the replenishing valve mechanism (33) is in a closed state, a reduced-pressure atmosphere of the raw material tank (34) is maintained.

2. The raw material supply device according to claim 1, wherein
the raw material tank (34) is provided outside the reduced-pressure chamber (3), and
the supply pipe (35, 435, 535, 635) penetrates a wall of the reduced-pressure chamber (3) to connect the raw material tank (34) and the reduced-pressure chamber (3) to each other.

3. The raw material supply device according to claim 1, wherein
the supply valve mechanism is a first temperature control mechanism (50) for adjusting a temperature of at least part of the supply pipe (35, 435, 535, 635) such that a state of the plasma raw material (1) is changeable into either a solid state or a liquid state.

4. The raw material supply device according to claim 3, wherein
the supply pipe (35, 435, 535, 635) includes a narrowed portion where a channel is narrowed, and
the first temperature control mechanism (50) is provided to the narrowed portion.

5. The raw material supply device according to claim 1, wherein
the supply pipe includes a first bent portion (61) and a second bent portion (62), the first bent portion (61) being connected to a side of the raw material tank (34) and bending a channel of the liquid plasma raw material (1) from downward to upward, the second bent portion (62) being connected to a side of the reduced-pressure chamber (3) and bending the channel from upward to downward, and
a lower surface of the channel formed in the second bent portion (62) is disposed at a position higher than an upper surface of the channel formed in the first bent portion (61).

6. The raw material supply device according to claim 5, wherein
the supply controller includes a second temperature control mechanism (450) for adjusting a temperature of the first bent portion (61) such that a state of the plasma raw material (1) is changeable into either a solid state or a liquid state.

7. The raw material supply device according to claim 1, wherein
the supply pipe (35, 435, 535, 635) includes an inlet (35a) to which the liquid plasma raw material flows from the raw material tank (34), and the inlet (35a) is disposed at a position higher than an inside bottom of the raw material tank (34).

8. The raw material supply device according to claim 7, wherein
the raw material tank (34) includes a replenishment port (42) to be replenished with the plasma raw material (1), and
the inlet (35a) is disposed at a position that does not overlap vertically with the replenishment port (42).

9. The raw material supply device according to claim 1, wherein
the storage container (21, 75a, 75b, 80) includes a storage portion (24) that opens upward and stores the liquid plasma raw material (1), and
the supply pipe (35, 435, 535, 635) includes an outlet (35b) of which the liquid plasma raw material (1) flows out, and the outlet (35b) is disposed at a position lower than an opening end of the storage portion (24) of the storage container (21, 75a, 75b).

10. The raw material supply device according to claim 9, wherein
the supply controller includes a third temperature control mechanism (650) for adjusting a temperature of a portion of the supply pipe (635) protruding toward the inside of the reduced-pressure chamber (3) such that the plasma raw material (1) enters one of a solid state and a liquid state.

11. The raw material supply device according to claim 1, wherein
the storage container (21, 75a, 75b, 80) includes a storage portion (24, 84) that opens upward and stores the liquid plasma raw material (1), and
the supply pipe (35, 435, 535, 635) includes an outlet (35b) of which the liquid plasma raw material (1) flows out,
the raw material supply device further comprising a defense pipe (70) that is provided to surround the outlet (35b) and extends to a position lower than an opening end of the storage portion (24, 84) of the storage container (21, 75a, 75b, 80).

12. A light source apparatus (100) that causes a plasma raw material (1) to be transformed into plasma (P) by irradiating the plasma raw material (1) with an energy beam (EB) to generate radiation, comprising:
a reduced-pressure chamber (3);
a storage container (21, 75a, 75b, 80) that is provided inside the reduced-pressure chamber (3), stores the liquid plasma raw material (1), and supplies the liquid plasma raw material (1) to a portion irradiated with the energy beam (EB); and
the raw material supply device (30, 30a, 30b, 230, 330, 430, 530, 630, 730) as claimed in claim 1.

13. The light source apparatus according to claim 12, further comprising
a rotation body (71a, 71b) to be irradiated with the energy beam (EB),
the storage container (21, 75a, 75b, 80) being a raw material container that is provided such that the rotation body (71a, 71b) is immersed and supplies the liquid plasma raw material (1) to the rotation body (71a, 71b).

14. The light source apparatus according to claim 12, wherein
the storage container is a rotating drum (80) that includes a storage portion (84) opening upward and stores the liquid plasma raw material (1) on an inner surface (82a) of the storage portion (84), and
the energy beam (EB) is applied to the inner surface (82a) of the storage portion (84).

## Patentansprüche

1. Rohmaterialzufuhrvorrichtung (30, 30a, 30b, 230, 330, 430, 530, 630, 730), die einem Inneren einer Unterdruckkammer (3) ein Plasma-Rohmaterial (1) zuführt, das in Plasma (P) umgewandelt wird, um bei Bestrahlung mit einem Energiestrahl (EB) Strahlung zu erzeugen, umfassend:
einen Rohmaterialtank (34), der das Plasma-Rohmaterial (1) in flüssigem Zustand enthält, und
eine Zufuhrsteuerung, die eine Zufuhrleitung (35, 435, 535, 635) umfasst, die den Rohmaterialtank (34) und die Unterdruckkammer (3) miteinander verbindet und das im Rohmaterialtank (34) enthaltene flüssige Plasma-Rohmaterial (1) einem Speicherbehälter (21, 75a, 75b, 80) zuführt, der innerhalb der Unterdruckkammer (3) vorgesehen ist, und die Zufuhr des flüssigen Plasma-Rohmaterials (1) durch die Zufuhrleitung (35, 435, 535, 635) steuert, wobei die Zufuhrsteuerung einen Zufuhrventilmechanismus (36, 50, 450, 550, 650) umfasst, der in der Zufuhrleitung (35, 435, 535, 635) vorgesehen ist, wobei der Zufuhrventilmechanismus (36, 50, 450, 550, 650) so konfiguriert ist, dass er den Fluss des flüssigen Plasma-Rohmaterials (1) öffnet und schließt und die Zufuhr des flüssigen Plasma-Rohmaterials (1) aus dem Rohmaterialtank (34) zum Speicherbehälter (21, 75a, 75b, 80) durch die Rohmaterial-Zufuhrleitung (35, 435, 535, 635) steuert,
**dadurch gekennzeichnet, dass** sie ferner umfasst:
eine Ablassleitung (38), die den Rohmaterialtank (34) und einen vorbestimmten Ablassmechanismus (45) miteinander verbindet,
einen Rohmaterialnachfüllabschnitt (31), der den Rohmaterialtank (34) mit dem Plasma-Rohmaterial (1) auffüllt,
wobei der Rohmaterialnachfüllabschnitt (31) umfasst:
einen Zufuhrabschnitt, der das Plasma-Rohmaterial (1) zum Nachfüllen des Rohmaterialtanks (34) zuführt,
eine Nachfüllleitung (32), die den Zufuhrabschnitt und den Rohmaterialtank (34) miteinander verbindet und bewirkt, dass das aus dem Zufuhrabschnitt zugeführte Plasma-Rohmaterial (1) durch diese hindurchfließt, und
einen Nachfüllventilmechanismus (33), der in der Nachfüllleitung (32) vorgesehen und konfiguriert ist, um so gesteuert zu werden, dass Plasma-Rohmaterial (1), wenn sich der Nachfüllventilmechanismus (33) in einem geöffneten Zustand befindet und die Zufuhrleitung (35, 435, 535, 635) sich in einem geschlossenen Zustand befindet, über die Rohmaterial-Nachfüllleitung (32) in den Rohmaterialtank (34) zugeführt werden kann, und so, dass, wenn der Nachfüllventilmechanismus (33) geschlossen ist, eine Unterdruckatmosphäre im Rohmaterialtank (34) aufrechterhalten wird.

2. Rohmaterialzufuhrvorrichtung gemäß Anspruch 1, wobei
der Rohmaterialtank (34) außerhalb der Unterdruckkammer (3) vorgesehen ist und
die Zufuhrleitung (35, 435, 535, 635) eine Wand der Unterdruckkammer (3) durchdringt, um den Rohmaterialtank (34) und die Unterdruckkammer (3) miteinander zu verbinden.

3. Rohmaterialzufuhrvorrichtung gemäß Anspruch 1, wobei
der Zufuhrventilmechanismus ein erster Temperatursteuerungsmechanismus (50) zum Einstellen einer Temperatur zumindest eines Teils der Zufuhrleitung (35, 435, 535, 635) ist, so dass ein Zustand des Plasma-Rohmaterials (1) entweder in einen festen Zustand oder in einen flüssigen Zustand überführbar ist.

4. Rohmaterialzufuhrvorrichtung gemäß Anspruch 3, wobei
die Zufuhrleitung (35, 435, 535, 635) einen verengten Abschnitt aufweist, in dem ein Kanal verengt ist, und
der erste Temperatursteuerungsmechanismus (50) an dem verengten Abschnitt vorgesehen ist.

5. Rohmaterialzufuhrvorrichtung gemäß Anspruch 1, wobei
die Zufuhrleitung einen ersten gebogenen Abschnitt (61) und einen zweiten gebogenen Abschnitt (62) umfasst, wobei der erste gebogene Abschnitt (61) mit einer Seite des Rohmaterialtanks (34) verbunden ist und einen Kanal des flüssigen Plasma-Rohmaterials (1) von abwärtsgerichtet nach aufwärtsgerichtet umbiegt, wobei der zweite gebogene Abschnitt (62) mit einer Seite der Unterdruckkammer (3) verbunden ist und den Kanal von aufwärtsgerichtet nach abwärtsgerichtet umbiegt, und
eine Unterseite des in dem zweiten gebogenen Abschnitt (62) ausgebildeten Kanals an einer Position angeordnet ist, die höher liegt als eine Oberseite des in dem ersten gebogenen Abschnitt (61) ausgebildeten Kanals.

6. Rohmaterialzufuhrvorrichtung gemäß Anspruch 5, wobei
die Zufuhrsteuerung einen zweiten Temperatursteuerungsmechanismus (450) zum Einstellen einer Temperatur des ersten gebogenen Abschnitts (61) umfasst, sodass ein Zustand des Plasma-Rohmaterials (1) entweder in einen festen Zustand oder in einen flüssigen Zustand überführt werden kann.

7. Rohmaterialzufuhrvorrichtung gemäß Anspruch 1, wobei
die Zufuhrleitung (35, 435, 535, 635) einen Einlass (35a) umfasst, zu dem das flüssige Plasma-Rohmaterial aus dem Rohmaterialtank (34) fließt, und der Einlass (35a) an einer Position angeordnet ist, die höher liegt als der innere Boden des Rohmaterialtanks (34).

8. Rohmaterialzufuhrvorrichtung gemäß Anspruch 7, wobei
der Rohmaterialtank (34) eine Nachfüllöffnung (42) zum Nachfüllen des Plasma-Rohmaterials (1) umfasst, und
der Einlass (35a) an einer Position angeordnet ist, die vertikal nicht mit der Nachfüllöffnung (42) überlappt.

9. Rohmaterialzufuhrvorrichtung gemäß Anspruch 1, wobei
der Speicherbehälter (21, 75a, 75b, 80) einen Speicherbereich (24) aufweist, der nach oben offen ist und das flüssige Plasma-Rohmaterial (1) lagert, und
die Zufuhrleitung (35, 435, 535, 635) einen Auslass (35b) umfasst, aus dem das flüssige Plasma-Rohmaterial (1) austritt, und der Auslass (35b) an einer Position angeordnet ist, die tiefer liegt als ein Öffnungsende des Speicherabschnitts (24) des Speicherbehälters (21, 75a, 75b).

10. Rohmaterialzufuhrvorrichtung gemäß Anspruch 9, wobei
die Zufuhrsteuerung einen dritten Temperatursteuerungsmechanismus (650) zum Einstellen einer Temperatur eines Abschnitts der Zufuhrleitung (635) umfasst, der in Richtung des Inneren der Unterdruckkammer (3) vorsteht, so dass das Plasma-Rohmaterial (1) in einen festen oder einen flüssigen Zustand übergeht.

11. Rohmaterialzufuhrvorrichtung gemäß Anspruch 1, wobei
der Speicherbehälter (21, 75a, 75b, 80) einen Speicherabschnitt (24, 84) umfasst, der nach oben offen ist und das flüssige Plasma-Rohmaterial (1) lagert, und
die Zufuhrleitung (35, 435, 535, 635) einen Auslass (35b) umfasst, aus dem das flüssige Plasma-Rohmaterial (1) austritt,
wobei die Rohmaterialzufuhrvorrichtung ferner ein Schutzrohr (70) umfasst, das so angeordnet ist, dass es den Auslass (35b) umgibt, und sich bis zu einer Position erstreckt, die tiefer liegt als ein Öffnungsende des Speicherabschnitts (24, 84) des Speicherbehälters (21, 75a, 75b, 80).

12. Lichtquellenvorrichtung (100), die bewirkt, dass ein Plasma-Rohmaterial (1) durch Bestrahlen des Plasma-Rohmaterials (1) mit einem Energiestrahl (EB) in Plasma (P) umgewandelt wird, um Strahlung zu erzeugen, umfassend:
eine Unterdruckkammer (3),
einen Speicherbehälter (21, 75a, 75b, 80), der innerhalb der Unterdruckkammer (3) vorgesehen ist, das flüssige Plasma-Rohmaterial (1) lagert und das flüssige Plasma-Rohmaterial (1) einem mit dem Energiestrahl (EB) bestrahlten Abschnitt zuführt, und
die Rohmaterialzufuhrvorrichtung (30, 30a, 30b, 230, 330, 430, 530, 630, 730) gemäß Anspruch 1.

13. Lichtquellenvorrichtung gemäß Anspruch 12, ferner umfassend:
einen Rotationskörper (71a, 71b), der mit dem Energiestrahl (EB) bestrahlt werden soll,
wobei der Speicherbehälter (21, 75a, 75b, 80) ein Rohmaterialbehälter ist, der so vorgesehen ist, dass der Rotationskörper (71a, 71b) eingetaucht wird und das flüssige Plasma-Rohmaterial (1) dem Rotationskörper (71a, 71b) zuführt.

14. Lichtquellenvorrichtung nach Anspruch 12, wobei
der Speicherbehälter eine rotierende Trommel (80) ist, die einen nach oben offenen Speicherabschnitt (84) umfasst und das flüssige Plasma-Rohmaterial (1) auf einer Innenfläche (82a) des Speicherabschnitts (84) lagert, und
der Energiestrahl (EB) auf die Innenfläche (82a) des Speicherabschnitts (84) gerichtet wird.

## Revendications

1. Dispositif d'alimentation en matière première (30, 30a, 30b, 230, 330, 430, 530, 630, 730) qui alimente l'intérieur d'une chambre à pression réduite (3) en matière première pour plasma (1) qui est transformée en plasma (P) destiné à générer un rayonnement lorsqu'elle est irradiée au moyen d'un faisceau d'énergie (EB), comprenant :
un réservoir de matière première (34) qui maintient la matière première pour plasma (1) dans un état liquide ; et
un organe de commande d'alimentation qui comporte une conduite d'alimentation (35, 435, 535, 635) qui relie l'un à l'autre le réservoir de matière première (34) et la chambre à pression réduite (3) et alimente un contenant de stockage (21, 75a, 75b, 80) situé à l'intérieur de la chambre à pression réduite (3) en matière première liquide pour plasma (1) maintenue à l'intérieur du réservoir de matière première (34), et qui commande l'alimentation en matière première liquide pour plasma (1) par la conduite d'alimentation (35, 435, 535, 635), l'organe de commande d'alimentation comportant un mécanisme de vanne d'alimentation (36, 50, 450, 550, 650) qui est situé sur la conduite d'alimentation (35, 435, 535, 635), le mécanisme de vanne d'alimentation (36, 50, 450, 550, 650) étant conçu pour ouvrir et fermer l'écoulement de la matière première liquide pour plasma (1) et commander l'alimentation en matière première liquide pour plasma (1) du réservoir de matière première (34) au contenant de stockage (21, 75a, 75b, 80) par la conduite d'alimentation en matière première (35, 435, 535, 635),
**caractérisé en ce qu'**il comprend en outre
une conduite d'échappement (38) qui relie l'un à l'autre le réservoir de matière première (34) et un mécanisme d'échappement (45) prédéfini,
une section de réapprovisionnement en matière première (31) qui réapprovisionne le réservoir de matière première (34) en matière première pour plasma (1),
la section de réapprovisionnement en matière première (31) comportant
une section d'alimentation qui assure l'alimentation en matière première pour plasma (1) afin de réapprovisionner le réservoir de matière première (34),
une conduite de réapprovisionnement (32) qui relie l'une à l'autre la section d'alimentation et le réservoir de matière première (34) et amène la matière première pour plasma (1) alimentée depuis la section d'alimentation à la traverser, et
un mécanisme de vanne de réapprovisionnement (33) qui est situé sur la conduite de réapprovisionnement (32) et qui est conçu pour être commandé de telle manière que, lorsque le mécanisme de vanne de réapprovisionnement (33) est dans un état ouvert et que la conduite d'alimentation (35, 435, 535, 635) est dans un état fermé, le réservoir de matière première (34) peut être alimenté en matière première pour plasma (1) par la conduite de réapprovisionnement en matière première (32) et de telle sorte que, lorsque le mécanisme de vanne de réapprovisionnement (33) est dans un état fermé, une atmosphère à pression réduite du réservoir de matière première (34) est maintenue.

2. Dispositif d'alimentation en matière première selon la revendication 1, dans lequel
le réservoir de matière première (34) est situé à l'extérieur de la chambre à pression réduite (3), et
la conduite d'alimentation (35, 435, 535, 635) traverse une paroi de la chambre à pression réduite (3) pour relier l'un à l'autre le réservoir de matière première (34) et la chambre à pression réduite (3).

3. Dispositif d'alimentation en matière première selon la revendication 1, dans lequel
le mécanisme de vanne d'alimentation est un premier mécanisme de commande de température (50) destiné à ajuster une température d'au moins une partie de la conduite d'alimentation (35, 435, 535, 635) de telle sorte qu'un état de la matière première pour plasma (1) peut être modifié soit en un état solide soit en un état liquide.

4. Dispositif d'alimentation en matière première selon la revendication 3, dans lequel
la conduite d'alimentation (35, 435, 535, 635) comporte une partie rétrécie dans laquelle un canal est rétréci, et
le premier mécanisme de commande de température (50) est situé sur la partie rétrécie.

5. Dispositif d'alimentation en matière première selon la revendication 1, dans lequel
la conduite d'alimentation comporte une première partie coudée (61) et une deuxième partie coudée (62), la première partie coudée (61) étant reliée à un côté du réservoir de matière première (34) et faisant faire un coude du bas vers le haut à un canal de la matière première liquide pour plasma (1), la deuxième partie coudée (62) étant reliée à un côté de la chambre à pression réduite (3) et faisant faire un coude du haut vers le bas au canal, et
une surface inférieure du canal formé dans la deuxième partie coudée (62) est disposée en une position plus haute qu'une surface supérieure du canal formé dans la première partie coudée (61).

6. Dispositif d'alimentation en matière première selon la revendication 5, dans lequel
l'organe de commande d'alimentation comporte un deuxième mécanisme de commande de température (450) destiné à ajuster une température de la première partie coudée (61) de telle sorte qu'un état de la matière première pour plasma (1) peut être modifié soit en un état solide soit en un état liquide.

7. Dispositif d'alimentation en matière première selon la revendication 1, dans lequel
la conduite d'alimentation (35, 435, 535, 635) comporte une entrée (35a) jusqu'à laquelle la matière première liquide pour plasma s'écoule depuis le réservoir de matière première (34), et l'entrée (35a) est disposée en une position plus haute qu'un fond intérieur du réservoir de matière première (34).

8. Dispositif d'alimentation en matière première selon la revendication 7, dans lequel
le réservoir de matière première (34) comporte un orifice de réapprovisionnement (42) destiné à être réapprovisionné en matière première pour plasma (1), et
l'entrée (35a) est disposée en une position qui ne se chevauche pas verticalement avec l'orifice de réapprovisionnement (42).

9. Dispositif d'alimentation en matière première selon la revendication 1, dans lequel
le contenant de stockage (21, 75a, 75b, 80) comporte une partie de stockage (24) qui s'ouvre vers le haut et stocke la matière première liquide pour plasma (1), et
la conduite d'alimentation (35, 435, 535, 635) comporte une sortie (35b) de laquelle s'écoule la matière première liquide pour plasma (1), et la sortie (35b) est disposée en une position plus basse qu'une extrémité d'ouverture de la partie de stockage (24) du contenant de stockage (21, 75a, 75b).

10. Dispositif d'alimentation en matière première selon la revendication 9, dans lequel
l'organe de commande d'alimentation comporte un troisième mécanisme de commande de température (650) destiné à ajuster une température d'une partie de la conduite d'alimentation (635) faisant saillie vers l'intérieur de la chambre à pression réduite (3) de telle sorte que la matière première pour plasma (1) passe à l'état solide ou à l'état liquide.

11. Dispositif d'alimentation en matière première selon la revendication 1, dans lequel
le contenant de stockage (21, 75a, 75b, 80) comporte une partie de stockage (24, 84) qui s'ouvre vers le haut et stocke la matière première liquide pour plasma (1), et
la conduite d'alimentation (35, 435, 535, 635) comporte une sortie (35b) de laquelle s'écoule la matière première liquide pour plasma (1),
le dispositif d'alimentation en matière première comprenant en outre une conduite de défense (70) qui est destinée à entourer la sortie (35b) et s'étend jusqu'à une position plus basse qu'une extrémité d'ouverture de la partie de stockage (24, 84) du contenant de stockage (21, 75a, 75b, 80).

12. Appareil source de lumière (100) qui amène une matière première pour plasma (1) à être transformée en plasma (P) en irradiant la matière première pour plasma (1) au moyen d'un faisceau d'énergie (EB) afin de générer un rayonnement, comprenant :
une chambre à pression réduite (3) ;
un contenant de stockage (21, 75a, 75b, 80) qui est situé à l'intérieur de la chambre à pression réduite (3), stocke la matière première liquide pour plasma (1), et alimente une partie irradiée au moyen du faisceau d'énergie (EB) en matière première liquide pour plasma (1) ; et
le dispositif d'alimentation en matière première (30, 30a, 30b, 230, 330, 430, 530, 630, 730) selon la revendication 1.

13. Appareil source de lumière selon la revendication 12, comprenant en outre
un corps de rotation (71a, 71b) destiné à être irradié au moyen du faisceau d'énergie (EB),
le contenant de stockage (21, 75a, 75b, 80) étant un contenant de matière première qui est prévu de telle sorte que le corps de rotation (71a, 71b) est immergé et alimente le corps de rotation (71a, 71b) en matière première liquide pour plasma (1).

14. Appareil source de lumière selon la revendication 12, dans lequel le contenant de stockage est un tambour rotatif (80) qui comporte une partie de stockage (84) s'ouvrant vers le haut et qui stocke la matière première liquide pour plasma (1) sur une surface intérieure (82a) de la partie de stockage (84), et
le faisceau d'énergie (EB) est appliqué sur la surface intérieure (82a) de la partie de stockage (84).
